# EUROPEAN PATENT APPLICATION

(11) **EP 3 107 051 A1**
(43) Date of publication of application: **21.12.2016**
(21) Application number: 16174286.1
(22) Date of filing: 19.10.2009
(51) Int. Cl.: G06Q 20/00, G06Q 20/20, G06Q 20/32, G06Q 20/36, G06Q 20/40, G06Q 20/42, G07F 19/00, H04L 29/06, H04W 12/06, H04W 4/02

(54) **MULTIFACTOR AUTHENTICATION**

(30) Priority: 17.10.2008 LU 91488
(62) Divisional of application: 09741279.5
(71) Applicant: Carter, Robert A., 1220 Luxembourg (LU)
(72) Inventor: Carter, Robert A., 1220 Luxembourg (LU)
(74) Representative: Dennemeyer & Associates S.A.

(57) **Abstract**

A method for use in authenticating an action using location information comprising a mobile device, the method comprising:
obtai ni ng an instruction for the mobile devi ce to enter an acti on enabled mode;
transmitting mobile device related information, wherein said information comprises device related location information and device related unique identifier code information;
identifying an action enabling token;
determi ni ng the val idity of the action enabl i ng token;
authenti cati ng the acti on if the acti on enabling token is determined val i d; and switching the mobile device into the action enabled mode if the action is positively authenticated.

## Description

This invention relates to apparatus, methods and systems for verifying the authenticity of an action, and in particular to apparatus, methods and systems for providing multifactor authentication for transaction processing systems such as those involved in debit or credit card payments.

Current card payment schemes using credit, debit and bank cards but also corporate ID and loyalty cards all use so-called single factor authentication (or not even that). Also the majority of current physical and virtual access systems use this basic form of authentication. An example of a single factor authentication system is the past use of a user's signature in order to prove their identity and entitlement to use a card. Another example is the current "Chip and PIN" system used in the UK, where a user must enter a Personal Identification Number (PIN) to confirm their authenticity.

Recent studies conducted by Gartner Research estimated that single factor systems amount to some 94% of all systems, including the authentication related to card systems. Security experts are of the opinion that this is notoriously insecure and is the reason why payment schemes continue to be defrauded.

The card system as it actually functions is already some 30 years old and has not changed much over time. The single factor authentication method used may have been considered as sufficient in earlier days but now security requirements are much higher.

The card holds details that are included in the card's magnetic stripe or on the microchip of more modern cards. This data is stored using some protection mechanism like encryption and in systems such as Automated Teller Machines (ATMs) the card can be used when the associated Personal Identification Number (PIN) is provided in conjunction with the card to authorise the use.

In order to pay for a good or service when the user is physically present, firstly the user of a card inserts it (or it is inserted by the retailer or other person accepting payment, or it may be swiped) into a Point Of Sale terminal (POS terminal). This terminal connects to the card system in order to inform the system of the details of the transaction, e.g. cost. Before the transaction can proceed, the transaction must be authorised by e.g. entering a correct PIN into the POS terminal or the retailer (or otherwise) verifying that the signature provided matches that on the card.

After this, other checks are performed by the card system, such as the status of the card (still valid, not stolen, no known issues) and the user (creditworthiness, actual credit standing, outstanding issues).

After these checks are performed by the central payment system the card can be used usually up to a certain credit ceiling per period, depending on the user's standing and the agreement with the issuing bank.

From the commercial and the acceptance point of view, the system is a great success and nearly everywhere in the world cards are used to pay for goods and services. From the security point of view the card system is prone to abuse and fraud.

From the introduction of these cards the PIN - a four digits numerical code - has typically been attributed to each individual card and used as a single factor authentication means. Even at their introduction, these four digit PINs were already not such a good example of how security should be implemented, and certainly as of today this measure cannot be considered as a safe means to protect the card against abuse.

Making this authentication measure even more useless and obsolete is the fact that PINs normally do not change during the life or validity of the card and often the same PIN continues to be valid for subsequently issued cards to the same cardholder. Comparing the method of authentication for such systems, which manage huge sums of money, with user id and password authentication of simple email systems where money is not involved at all, it is clear that the security for such systems is far inferior.

A security feature that is part of the credit card system and which was the main authentication used in the past, before electronic systems made them de facto obsolete is the signature of the cardholder. In the past a cardholder needed to sign the card in the presence of issuing banks' personnel before the card was formally handed over to the cardholder. This procedure assured that the signature on the card was that of the person supposed to be signing the card and in addition, as a bank customer the identity of the person was implicitly checked.

Nowadays this procedure does not take place anymore and signatures on the card have lost any value as cards are sent out to the customer's address without any serious "prior signature" security checks whatsoever. Signatures do not need to be forged anymore to appear falsely on the card. Some card issuing companies require that a call is placed by the recipient of the card (usually and hopefully the cardholder) to the card issuer to confirm that the card has been received and can be activated, but still no check can be made by the issuing party if the signature on the card is the proper one.

Despite the problems associated with on-card signatures, the scheme remains an acceptable standard in e.g. Australia where customers can choose when purchasing at merchants between authentication by PIN or by signature. Single-factor authentication will continue to exist and in this case the customer further has the option between different "keys", evidently this will increase the risks of fraud.

In some cases where PIN Codes cannot be verified, such as with internet based payments, another code (like the Credit Verification Value (CVV or CVV2) Code, a 3 or 4 digit code printed on the card) needs to be conveyed. Viewed from a security point of view this is a totally inadequate verification methodology.

In the past, great effort has been put into better protecting electronic payment schemes in general and card systems in particular. Despite these elaborate efforts, a constant rise in fraud and abuse can be noted. One of the main reasons may be in fact that the technology used to produce these cards has not advanced much and not as fast as code breaking and hacking technologies have advanced over time.

Cards with a magnetic stripe were enhanced with security features ranging from the additional Credit Verification Value/Card Validation Code (CVV) codes on the card, a photograph of the credit card holder printed on the backside of the card to cards that included a microchip or other security features.

However none of these card enhancements have led to a significant improvement in the level of security that protects the card, partly due to the fact that the low acceptance rate of the cards meant that improved security measures needed to be switched off (a good example is the microchip before the development of e.g. "Chip and Pin" in the UK).

Even worse, the development of electronics in terms of capabilities and costs resulted in a situation that hacker equipment is easily available at prices that are easily affordable. These devices can read and copy the contents of a credit card and, together with free software available on the internet, have resulted in dramatically lowering the technical threshold to skimming credit and similar cards.

Nowadays, online payment transactions, where no physical presence at the moment of the transaction is required, are becoming more common and so-called face-to-face transactions are representing an ever smaller proportion of overall payment transactions. In the USA, these transactions are referred to as MOTO (Mail Order Telephone Order) transactions or generically CND (Card Not Present) transactions. From a security point of view, this situation requires that the card and its holder are obliged to provide additional authentication information to the merchant and the clearing house. Nowadays, in most cases, an internet gateway and card processing agent is involved. The inherent weaknesses of such methods lacking the physical means to conduct further checks remains a great problem to credit card companies.

A new development in the field of card payments and financial transactions is the Single EURO Payment Area, SEPA. SEPA is a unified payment area within the EU-27 zone plus 4 other European countries where the Euro will be regarded as the domestic currency for payments within that area. The Euro Banking Association through the European Payment Council with the European Central Bank and the European Commission are setting rules and standards to facilitate and speed up the processes and procedures of inter-SEPA area Euro payments. Also the legal context of financial transactions, which sometimes differs in its principles and its applications, will be aligned between the SEPA countries.

The main issue tackled by SEPA is to facilitate the handling of cross border (but intra-SEPA) EURO payments (including credit card payments and direct debits) as if they were domestic payments. Despite the fact that security has been one of the main topics amongst many other issues at stake, it has never been regarded as a core requirement of SEPA. Therefore after starting the full introduction of SEPA within the 31 SEPA countries, expected to take place in 2010, the security concerns present in current financial transactions will still apply.

Recently it has even been argued by the British Retail Association that SEPA would even increase the risks of fraud and abuse due to the fact that SEPA cross border automated procedures will allow criminals to gain access to cards and bank accounts from those SEPA countries which do not have sophisticated anti-fraud mechanisms in place or do not provide the legal context to effectively combat criminal activities in this area.

As such, there is a need for a new way to authenticate transactions, and in particular card transactions, to ameliorate the problems encountered today with fraud and the various other card-related crimes.

According to a first aspect of the invention, there is provided a method for use in authenticating transactions comprising receiving a request from a terminal to authenticate a transaction; receiving information from the terminal identifying a token that is being used to initiate the transaction; identifying a mobile device that is associated with the token; determining the location of the mobile device; comparing the location of the mobile device with the location of the transaction; and authenticating the transaction if the location of the mobile device is within a predetermined area relative to the location of the transaction.

According to a second aspect of the invention, there is provided a method for multi-factor transaction authentication in a system comprising a terminal, the method comprising determining token identifying details for a token that is to be used to initiate a transaction; obtaining an authentication key; identifying a mobile device that is associated with the token; determining the location of the mobile device; and authenticating the transaction if the location of the mobile device is within a predetermined area relative to the location of the transaction and the authentication key is successfully validated with the token identifying details.

Optionally, the authenticating step may depend on other plausibility conditions being complied with.

The result of the application of these methods is a secure transaction authentication system that checks for not just a first authentication factor of using a token and associated authentication key, but also the proximity of a separate device, making the system substantially harder to trick into authenticating an invalid transaction. This renders cloned tokens are essentially useless, without the proximity of the registered token holder.

The location of the transaction may correspond to a registered location of the terminal, meaning that the system can check to see if the mobile device is near to a location determined by e.g. a contractual relationship with a card acquirer (who receives payment as a result of a transaction), or an otherwise predetermined region.

Optionally, the method may further comprise determining the current location of the terminal, the authenticating step further comprising: comparing the location of the transaction with the current location of the terminal; and authenticating the transaction if the current location of the terminal is within a predetermined area relative to the location of the transaction. Such a three-way location comparison adds a further security step of making sure that the terminal is being used in an appropriate location and, for example, not being passed off as belonging to another vendor.

Optionally, the location of the transaction corresponds to the current location of the terminal. This allows the location of the mobile device to be compared to the actual location of the terminal, which may offer increased security.

This method may then further comprise obtaining a registered location associated with the terminal; the authenticating step further comprising: comparing the location of the transaction with the registered location of the terminal; and authenticating the transaction if the location of the transaction is within a predetermined area relative to the registered location of the terminal. Such a three-way location comparison adds a further security step of making sure that the terminal is being used in an appropriate location and, for example, not being passed off as belonging to another vendor.

Preferably, the method further comprises an initial step of receiving a signal from a mobile device identifying a token to be enabled for transactions; validating the identity of the mobile device using a unique identifier received from the mobile device; and recording that said token has been enabled for transactions wherein said authenticating includes determining if said token has been enabled for transactions. This introduces a further securing step that can be used to prevent the token being used to initiate unauthorised transactions when, for example, the location of the mobile device is undeterminable.

Optionally, the method may further include waiting until a predetermined condition is met and then recording that the token is disabled for transactions. Such a predetermined condition may for example be the expiry of a period of time or the movement of the mobile device outside of a certain area.

Preferably, the location of the mobile device is determined remotely from the device using information received from the mobile device, the information being derived from information received by the mobile device from a Global Navigation Satellite System (GNSS). This provides a highly accurate fix on the location of the mobile device, without the mobile device having to actually transmit its location and thus increasing the privacy of the system.

The identity of the mobile device may be verified by receiving from the mobile device a unique identifier, the unique identifier comprising a code derived from information relating to the mobile device hardware and information received from a GNSS. This unique identifier is therefore secure, and difficult to fake.

According to a third aspect of the invention there is provided a method for use in authenticating a transaction comprising determining token identifying details for a token that is to be used in the transaction; obtaining an authentication key; validating the authentication key with the token identifying details; transmitting information associated with the location of the transaction and the token identifying details to a remote security apparatus; and receiving authorisation information for indicating if the transaction can be processed.

This method therefore provides location information relating to a transaction that can be compared with the location of a mobile device in order to determine whether to authenticate a transaction.

Preferably, the information associated with the location of the transaction is derived from information received from a GNSS. As above, this results in a highly accurate fix on the location of the transaction.

Optionally, the information associated with the transaction further comprises information identifying the terminal for enabling a registered location associated with the terminal to be obtained. This allows the location of the terminal to be checked against the area in which it is permitted to operate.

Optionally, the information received from the GNSS is unprocessed GNSS constellation and timing information. This means that the transmitted signal that is used to determine the location is significantly more complicated, and is much more difficult to fake than a signal containing processed location data e.g. a grid reference.

Advantageously, the token is a bank card. This means that the methods can be used to provide a further authentication factor for credit and debit card transactions, as well as transactions at ATMs and even the "transaction" of initiating a bank transfer.

According to a fourth aspect of the invention, there is provided transaction authentication apparatus comprising terminal communication means for communicating with a remote terminal, adapted to receive information identifying a token being used to initiate a transaction; identifying means for identifying a mobile device associated with said token; determining means for determining the location of said mobile device; and comparing means for comparing the location of said mobile device with the location of said transaction.

According to a fifth aspect of the invention, there is provided an apparatus for use in multi-factor transaction authentication comprising a terminal, the terminal comprising token reading means; authentication key input means; validating means for validating an authentication key with token identifying information; the apparatus further comprising identifying means for identifying a mobile device associated with said token; determining means for determining the location of said mobile device; and comparing means for comparing the location of said mobile device with the location of a transaction.

These apparatus can be used in a highly secure, multi-factor authentication system that compares not just traditional single factor authentication keys, such as a PIN or signature, but also checks and compares the location of a separate mobile device, that means the system cannot be tricked by stolen or cloned tokens when used without the presence of the registered token holder.

Optionally, the location of the transaction may correspond to a registered location associated with the terminal. This means that the system can check to see if the mobile device is near to a location determined by e.g. a contractual relationship with a card acquirer , or an otherwise predetermined region.

Optionally, the apparatus may further comprise determining means for determining the current location of the terminal, the comparing means further being adapted for: comparing the location of the transaction with the current location of the terminal. Such a three-way location comparison adds a further security step of making sure that the terminal is being used in an appropriate location and, for example, not being passed off as belonging to another vendor.

Alternatively, the apparatus may further comprise determining means for determining the location of the transaction by determining the current location of the terminal. This allows the actual location of the terminal to be compared to the location of the mobile device, which may increase security.

Optionally, this apparatus may further comprise means for obtaining a registered location associated with the terminal; the comparing means further being adapted for: comparing the location of the transaction with the registered location of the terminal. Such a three-way location comparison adds a further security step of making sure that the terminal is being used in an appropriate location and, for example, not being passed off as belonging to another vendor.

Preferably, the apparatus further comprises storage means for recording receipt of a signal indicating that a token is enabled for transactions. The storage means provide for a further layer of security in which a token must first be enabled for transactions before it can be used, meaning that even in the event of the theft of the mobile device and token the system is not necessarily compromised.

Preferably, the apparatus comprises mobile device communication means for receiving GNSS information from the mobile device; and processing means for calculating the location of said mobile device based on the received GNSS information. The apparatus can therefore communicate easily with the mobile device, and receive highly accurate location information from it in the medium of GNSS information. The GNSS information is preferably not transmitted as a resolved location, but rather as information relating to the GNSS satellites' locations and times of flight of their signals, or similar "unprocessed" GNSS signals such that the location of the mobile device is not necessarily transmitted.

Optionally, the identifying means may be adapted to identify the mobile device by receiving from the mobile device a unique identifier code comprising a code derived from information relating to the mobile device hardware and GNSS information. Such an identifier code is therefore a complicated unique code, and difficult to hoax.

According to a sixth aspect of the invention there is provided terminal apparatus for use in authenticating a transaction comprising token reading means for obtaining token identifying information; authentication key input means for receiving an authentication key; validating means for validating the authentication key with the token identifying information; communication means for transmitting information associated with the location of the terminal apparatus and the token identifying information to a remote security apparatus, and further adapted for receiving token authentication information; and authentication means for authenticating said transaction according to said token authentication information and the output from said validity means.

Such terminal apparatus can communicate location information to a remote security apparatus for comparison with other information, such as that relating to the location of a mobile device.

Preferably, the information associated with the location of the terminal apparatus is derived from information received from a GNSS. This provides an accurate indication of the location of the apparatus.

Optionally, the GNSS information may be unprocessed GNSS constellation and timing information. This means that the location information is significantly more complicated, and is much more difficult to fake than processed location data e.g. a grid reference.

Optionally, the communication means may be further adapted for transmitting information identifying the terminal, for indicating a registered location associated with the terminal. This allows a remote server to obtain a registered location for the transaction, and potentially compare it with the current location of the terminal apparatus.

According to a seventh aspect of the invention, there is provided a method for use in authenticating a transaction comprising obtaining an instruction for a mobile device to enter a transaction enabled mode; and transmitting to a remote security apparatus mobile device location information and a unique identifier code.

Following this method, a mobile device can be enabled in order to use it in conjunction with the aspects described elsewhere, providing an extra source of authentication information.

Preferably, the method further includes obtaining token information for specifying a token to be enabled for transactions; transmitting token identification information relating to the specified token; receiving confirmation that the token is enabled for transactions; and indicating that the specified token is enabled for transactions. As such a user of this method is able to selectively enable one of a selection of tokens and receive confirmation that the token is enabled.

Preferably, the method further comprises receiving GNSS information for providing the location information that is transmitted. This GNSS information can be used to accurately determine location information.

Optionally, the unique identifier code comprises a code derived from information relating to the mobile device hardware and GNSS information. This code is a complicated code that is difficult to fake, and helps ensure that the code is unique.

Optionally, the GNSS information used may be unprocessed GNSS constellation and timing information. This information is substantially more complicated than processed location information, and consequently more difficult to fake. This information is further less susceptible to "replay" attacks as GNSS constellation and timing information is constantly changing.

According to an eighth aspect of the invention there is provided a mobile device for use in authenticating a transaction comprising an interface for receiving instructions from a user and displaying information; means for selectively switching said mobile device to a transaction enabled mode; location determining means for determining location information relating to the location of the mobile apparatus; a unique identifier code for identifying the apparatus; and communication means for transmitting the location information and unique identifier code when in said transaction enabled mode.

Said mobile device can be used to provide location information to the other aspects of the invention in the selectively switchable transaction enabled mode.

Preferably, the location determining means comprises GNSS receiving means for obtaining GNSS information. This GNSS receiving means can be used to provide a highly accurate location fix on the mobile device.

Optionally, the unique identifier code comprises a code derived from information relating to the mobile device hardware and GNSS information. Such a unique identifier code is complicated and difficult to fake.

Optionally, the GNSS information used is unprocessed GNSS constellation and timing information. This means that the location information is significantly more complicated, and is much more difficult to fake than processed location data e.g. a grid reference.

Optionally, there may be provided an additional method of: collecting information on the position of the mobile device using fragmented data sets from said mobile device; setting-up concealed communication links with said mobile device using encryption and tunnelling means comprising Virtual Private Networks (VPN) between the said mobile device and the receiver; completing said fragmented data into complete data sets using Global Navigation Satellite System (GNSS) information; obtaining further information from in-space or terrestrial positioning enabling sources, wherein the in-space sources comprise Satellite Based Augmentation Systems (SBAS), and wherein the terrestrial sources comprise Radio Frequency (RF) systems, pseudolite systems, direction finding electronic instruments or Augmented Reality Overlay systems; establishing that the information received from said mobile device is genuine and authentic; and validating the position of said mobile device using the said fragmented data sets, the said complementing GNNS information and the said further information from positioning sources.

Optionally, two terminal apparatus may be used to perform separate challenges and responses and to increase the reliability of the determination of the terminals' authenticity. Optionally, validation of the transaction request made through the first terminal requires the validation by the second terminal apparatus to authenticate said transaction request and to provide transaction relevant information to the security apparatus.

Optionally, the transaction relevant information comprises a Personal Identification Number (PIN), a Transaction Authentication Number (TAN), the transaction amount or a unique identifier belonging to the terminal apparatus individually or in combination.

Optionally, the communication between the terminal apparatuses is concealed and wherein such communication uses different data channels and/or communication means.

Optionally, the authenticity of each terminal, the validation of the transaction request and the transaction relevant information uses token information comprising a GNNS derived code.

Optionally, the first card reading terminal provide card credentials to the security apparatus and wherein said apparatus stores said card credentials before transmitting credentials to the second terminal.

Optionally, the card credentials stored by the security apparatus are used by said apparatus to produce pseudo card credentials that are associated with said card using GNNS timing and constellation data.

Optionally, the pseudo card credentials have a limited validity and wherein said credentials are transmitted to the second terminal capable of storing said credentials in lieu of the genuine card credentials.

Optionally, the second terminal is capable to store such card credentials for the duration of a payment transaction session only.

Optionally the second terminal is a payment card terminal equipped with processing, storage, communication and key input means and wherein said card provide pseudo card credentials to authenticate said terminal as part of the transaction request authentication process.

Optionally, the second terminal is a mobile device or a payment card equipped with GNNS receiving means and wherein the identity of said terminal is verified by receiving from said terminal a unique identifier, the unique identifier comprising a code derived from information relating to said terminal hardware and information received from a GNSS.

Optionally, the first terminal is a mobile device and the communications means comprise Near Field Communication (NFC) and/or Radio Frequency Identification (RFID).

Optionally, locations may be determined using different location data capturing means comprising a mobile apparatus and a security apparatus that each obtain predetermined complementary location information from various terrestrial and in-space sources for location processing at the security apparatus.

Optionally, the location determination of the mobile device is made impossible by only using the fragmented data captured by said mobile device and wherein the security apparatus location determination means is made incapable to locate said device without said mobile device sending predetermined information comprising the unique identifier, the session token and fragmented data sets.

Optionally, the mobile device location determination is performed by the security apparatus using location information obtained by said security apparatus in combination with the predetermined information transmitted by said mobile device.

Optionally the communication of requests, signals, keys, tokens, information or data, required to authenticate, identify, validate, determine, record, compare, establish, verify, identify or determine is concealed and established using terrestrial radio means or in-space two-way S-Band means individually or in combination.

Optionally, the wireless communication means are adapted to establish communication tunnels between sender and receiver comprising VPN and wherein the data transported through said tunnels is encrypted.

Optionally, the wireless communication of requests, signals, keys, tokens, information or data to and from the mobile device, required to authenticate, identify, validate, determine, record, compare, establish, verify, identify or determine is concealed using cryptographic and data tunnelling means.

Optionally, the wireless communication links are established using terrestrial radio or using in-space two-way S-Band means individually or in combination.

Optionally, the said use of cryptographic and data tunnelling means and/or terrestrial radio and/or S-Band means is supplemented with GNNS means.

Optionally, the location determining means of the mobile device may comprise SBAS receiving means for obtaining SBAS information.

Optionally, the location determining means of the mobile device comprises electronic direction finding means comprising compass, gyroscope or pedometer instruments for obtaining supplementary location information.

Optionally, the location determining means comprises Augmented Reality (AR) means for obtaining location overlay information.

Optionally, the communication means comprises single outbound data channel communication or comprises multiple synchronised outbound data channels working in parallel, jointly or intermitted.

Optionally, the multiple synchronised outbound data channels working in parallel, jointly or intermitted uses different radio means.

There may optionally be provided a method for use in authenticating a transaction terminal device comprising: receiving GNNS signals directly from GNNS satellites or indirectly from terrestrial GNNS signal relaying systems; selecting predetermined timing and constellation data sets from said signals; determining the authenticity of said GNNS signals; obtaining hardware related information from the terminal device; obtaining communication related information from said device; generating codes uniquely identifying such device; and securely storing such codes within the device.

Optionally, this method may comprise an initial step of: receiving a token from a security apparatus enabling the generation by the transaction device of identification codes; and determining and validating the authenticity of said token

Optionally, the identification unique codes comprise a data set of a pair of GNSS timing and constellation data obtained at different times and/or different locations and wherein the said data set comprises one said pair of time and location information generating a GNNS fingerprint.

Optionally, the different pairs of GNNS timing and constellation data sets obtained at different times and/or different locations are combined and merged using hashing functions into one single pair of time and location information.

Optionally, the unique codes further comprise a hardware related code and a communication related code merged into a hardware fingerprint using hashing functions generating a device fingerprint.

Optionally, the individual GNNS and device fingerprints are combined and merged using cryptographic means into a unique identifier associated with the transaction terminal device.

This invention provides a secure and easy way to use multi-factor authentication methodology, and can be used in conjunction with a single-factor authentication methodology to provide an extra layer of security. The invention is particularly suitable for use in the financial services market, especially for protecting current (card based) electronic payment schemes. The invention can be used in a card payment environment enabling the safe execution of payments, of mobile transfers or cash withdrawals or any similar financial transaction with any credit, bank card or similar instrument using electronic means and the current infrastructure as well as in other areas described herein.

The invention offers smart and secure protection mechanisms to avoid the abuse and the compromising of the payment scheme, as is presently the case with only single factor authentication.

If current systems were enabled with this multi-factor authentication method, high value financial transactions could be more securely executed, and if needed larger sums of cash could be withdrawn from standard Automatic Teller Machines (ATMs) while credit cards could be used without ceiling or limitations as long as these are backed by a sufficiently high credit standing and creditworthiness of the person involved. Furthermore no supplementary cards, mini calculators, dongles or other devices will need to be used, apart from a cellular phone or similar mobile device with wireless communication (such as a PDA with GSM/UMTS [Universal Mobile Telecommunications System, also known as 3G] capabilities), herein also referred to as an MS, mobile device or mobile component.

The invention introduces a second level of high grade authentication using a device that is already used by the overwhelming majority population over 12, in the industrialised world. A standard cellular phone (referred to as MS) with a built-in or connected GPS or equivalent receiver (or other location determining capability) and the appropriate software can be used. No significant hardware modifications to the MS are needed. The invention can also be adopted from this base for other purposes where multifactor authentication is needed.

The invention will now be described, by way of example, with reference to the drawings in which:
Figure 1 is a schematic diagram of the card system according to the present invention; and
Figure 2 is a schematic representation of the DNA generation of the present invention.

The embodiments described depict the use of the invention in enhancing the security of credit and debit card transactions. However, the principles described may readily be adapted for use in almost any other transaction/interaction where authentication is required. Specific examples are listed of some of the potential applications of the invention.

It will be obvious to the skilled man that the various features described herein may be further combined or adapted for combined use in order to improve or provide alternatives to the specific embodiments described herein.

### General Summary

As previously discussed, credit and debit card transactions are currently carried out using single factor authentication - either the entering of a user's PIN (as used at ATMs worldwide and in the UK at the Point Of Sale (POS)) or providing of a signature (as used to be the case in the UK, and can still be the case in Australia).

In this embodiment, a second authentication factor can be used, in conjunction with current authentication methods, in order to provide a highly secure payment system that is difficult to defraud. To avoid confusion, the current card transaction processing system will be referred to herein as a "card system", and the system introduced by the invention in this embodiment as a "security system". Additionally, credit cards, debit cards, cash cards and the like may be referred to as "bank cards".

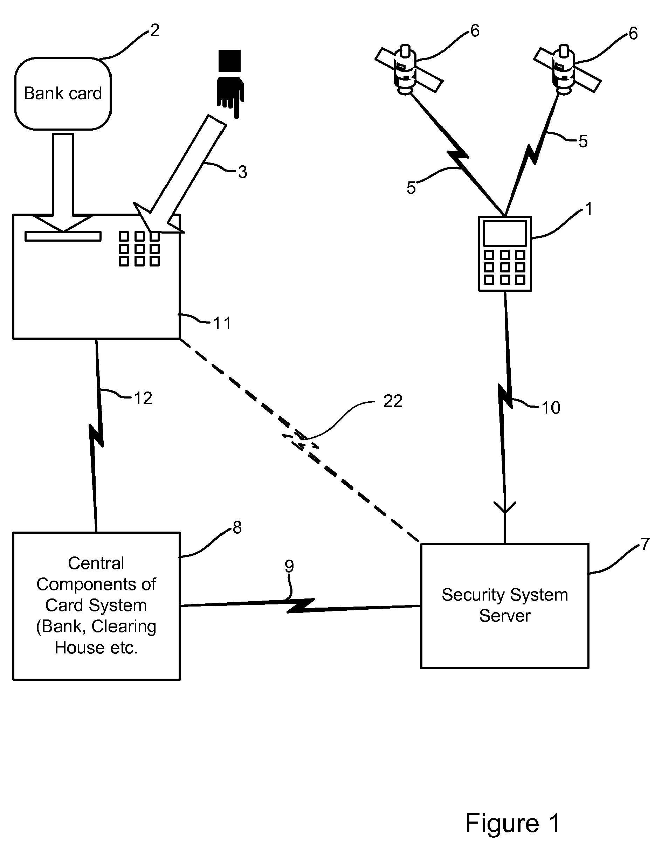

Reference is now made to figure 1. In this embodiment, a user of the security system has a mobile phone or MS 1 in addition to their bank card 2 and usual method of authentication, e.g. PIN 3. The MS device incorporates a unique identifier herein referred to as the 'MS DNA' or simply 'DNA'. The DNA is unique to a particular phone. This DNA serves to establish a unique relationship between a MS 1 and a card 2. There may be more than one card associated with a particular MS, for example in the case where a user has a credit and a debit card. The DNA is created by a sequencing procedure that uses, amongst other data, Global Navigation Satellite System (GNSS) signals 5. The GNSS 6 may be the current Global Positioning System (GPS) system as implemented by the US, or other systems such as the European Galileo System. Furthermore, any future in-space or terrestrial locating system may be used in place of GNSS. The MS 1, by having a DNA such as this enables it to be used as a security token in authentication transactions, in a manner that will be described below.

The purpose of this uniquely identifiable MS 1 (via the DNA) is to enable a two-factor authentication system, exchanging session tokens between the MS and a remote central component, server 7 of the security system that opens a time and location transaction window in which trusted payments and transaction requests can be initiated and "passed on" to the present existing card system 8 via a communications gateway 9. In this embodiment, the security system provides an additional security check for the card system.

It is possible that in other embodiments of the invention, the security system 7 may be integrated into the card system 8, so that there are not separate servers for each. Of course, in such an embodiment, the security system 7 would probably be limited to operating to authenticate financial transactions, and would not be capable of the more diverse applications listed below. Furthermore, it is possible to envision a scenario where the card system 8 may override an indication from the security system not to proceed with a transaction, for instance in the case where a user's mobile device is out of battery charge or in case the mobile device is otherwise out of order, and an urgent transaction needs to be made, although procedures would need to be in place to ensure that this did not provide a significant security flaw in the system.

In another embodiment, security system 7 may in fact completely isolate card system 8 and only "pass on" transaction requests when their authenticity has been verified by the security system. In such a case, the security system 7 would communicate with MS 1 via wireless link 10 as before. The security system 7 would however communicate with the boundary terminals 11 via communications network 22. Upon performing the checks relating to the location of the MS with respect to the location of the boundary terminal, the security network can permit access to the "back end" or central components of the card system 8. It can either forward information from the boundary terminal via communications link 9 or a communications link 12 may be established directly between the boundary terminal 11 and the card system 8. The decision to permit access to the "back end" 8 may be made, in its simplest form, as a simple yes or no. In this embodiment, the security system is acting as a "shield" or "gatekeeper" with respect to the card system, allowing the card system to run its normal payment processes but with the security system providing additional confirmation of the authenticity of the requested transaction. In effect, the security system 7 may prevent authorisation requests from a boundary terminal 11 ever reaching the card system 8, when the location verification fails.

In this "shield" embodiment, in order to process a transaction the boundary terminal 11 may first initiate a communications link 22 with security system 7. On processing the request and determining its authenticity, security system 7 may then pass on the information to card system 8. Card system 8, on performing its own checks, may then initiate a communications link 12 with the boundary terminal 11 to confirm that the transaction can go ahead.

Within the multi-factor system of the invention, once a transaction window is opened the user can initiate safely a financial transaction. When a transaction window is initiated, firstly the security system effectively switches the bank or credit card from being locked to unlocked, i.e. from a payment-disabled mode to a temporary payment-enabled mode. Secondly, the security system will execute a series of plausibility checks regarding the current position of the MS, and hence the user, in relation to the card or place of use of the card and it continues to perform certain checks during the period the transaction window is open.

This position related checks are referred to herein as Perimeter Compliance Tests to continue to provide proof to the system that the MS continues to be in the vicinity (= perimeter) of the place where the card is used. The vicinity may be defined in different ways. It may for example simply be that the locations must be within a certain distance of each other or that one location is within an area defined relative to the other location. Other definitions of vicinity may be used according to the specific application.

On the broadest level, the security system 7 interfaces with or relates to the card system on two levels. On a first level, the MS 1 is associated with one or more cards, using the DNA to uniquely identify the MS. On a second level, the server or servers of the security system 7 interface with the servers of the card system 8 - which may be the issuing bank, a clearing house or a payment/settlement agent.

The central server of the security system 7 interfaces with the MS 1 via a standard wireless communications link 10 provided by a mobile operator, although it is possible to envision a system with a dedicated and separate communications network e.g. over alternative two way satellite communication links using as an example S-Band frequencies. Assuming a card 2 is ready to be used in a transaction, i.e. is in the payment-enabled mode (mentioned above and described in detail later), when a card transaction is initiated, the terminal requests authorisation from the card system server 8 over the network 12. The server of the card system 8 communicates with the security system server 7 when authorising a transaction on the card. The security server 7 checks the location of the MS 1 associated with the card 2 to be authorised, and if it is within a predetermined distance of the terminal 11, from which the authorisation is being sought, it returns an authorisation to the card server to propose to permit the transaction to take place.

The payment request from the terminal may then be authorised by the card system (or not) based upon other checks and verifications on - as an example - the credit standing of the cardholder, as is already the case in current transaction authorisation and approval procedures applied by such systems.

Different procedural steps exist depending on the type of card transaction the user would like to execute.

In the case of a credit card payment the procedure is as follows:
1) The user (card holder) uses his mobile device MS 1 to send to the remote security system 7 a request via a wireless network 10, indicating that he intends to use a specific credit card 2 to make payments. This is done using an application on the MS 1 that may be integral to the MS, or may have to be selectively started. The user then enters a code or other identifier into the MS that identifies and possibly verifies the card the user wants to use. This may be a non security critical and thus short code used only to identify the card, for instance where the user has more than one payment card known to the system.
   There may alternatively be a more secure code that has to be entered in order to check the identity of the user, although this functionality may be replaced to some extent by the requirement to enter a PIN into most MS devices on switching them on. After authentication by the security server 7 using the unique DNA code of the MS, a session (transaction time) window is opened. This information (that the window is open) may be stored on the security system server 7, or alternatively relayed at once to the server of the card system 8. The user may receive some kind of notification that the card is now in payment enabled mode. This process may also allow the user to set an expiry time or conditions on the transaction window, or this may be automatic. Now a check is performed to define the precise location and the area or perimeter the user is currently in.
2) After security system checks are satisfactorily performed, which comprises inter alia a coded handshake and encrypted exchange of keys, a transaction window is opened for a certain time within the security system (and shown on the MS) and a payment session starts, enabling the card for payments. The user is now given the opportunity to request that his intended purchases will be charged against the card, which is currently enabled, in the usual way.
3) When the user decides to request a charge against the card, the merchant will follow the payment procedures he is used to following, without any change and in fact may not be aware at all that this card has additional associated security features. The usual authentication process, be it via the user entering a PIN or the merchant confirming a matched signature will be followed. This involves inserting or introducing the card 2 to a POS terminal or boundary terminal 11 of the card system. The user then enters their PIN and an authorisation request is sent to the card system 8. The response time of the card system will not be longer than is the case with current card systems regarding the return authorisation feedback from the card system.
4) The usual card verifications will be performed by the card system including the checks on the associated PIN (the normal authentication factor 3), the card details such as the validity or eventual (if required by the processor) customer related issues, creditworthiness etc. At the same time the security system 7 continues to monitor the location of the MS, whilst the transaction window is open and thus the card is enabled, and performs a series of plausibility checks. Amongst other things, the proximity between the use of the card at the terminal 11 and the location of the MS is checked. The security system is able to inform the card system of the results of the checks, allowing a transaction to be terminated in the case that the MS moves outside of the acceptable vicinity.
5) The check to determine if the boundary terminal and the MS are in each other's vicinity can be performed as follows. On the basis of information about where the merchant's shop is located (e.g. on the basis of a Cartesian representation of the physical or geographical address which may be obtained using a GNSS) a calculation is made of the difference between that location and the actual MS's location. The shop's location can be determined on the basis of the contract between the merchant as credit card accepting vendor and the card acquiring organisation (which may be a POS network service provider). Alternatively or in combination, the location of the boundary terminal itself may be determined using GNSS or other similar techniques as described in relation to the MS. The difference may not exceed a certain predetermined threshold. Alternatively, as may be the case when more accurate GNSS locating techniques become available e.g. through EGNOS, the check may be based on whether the MS is in a predetermined area based on the shop layout, size etc ensuring that in cases when e.g. the terminal used is near a wall the permitted area does not extend to outside the shop.
6) Further possibilities are to obtain the IP (Internet Protocol) address of the subscriber of the telecom connection 12 to which the POS terminal 11 is attached. There are basically two sorts of IP addresses, the dynamic IP address which belongs to an Internet Service Provider (ISP) who typically attributes these addresses randomly to its customers, usually the moment they switch on. The second type of IP address is the static one, an address which is uniquely attributed by the ISP to one of its customers. In this latter case, a direct relationship can be established (or mapped) between the static IP address and the merchant who is the subscriber to the IP network services, allowing an alternative methodology of determining the location of the terminal 11 and whether that is acceptable relative to the location of the MS to enable payment.
7) The security system may have three different sets of location information, comprising MS location, the shop location and the actual location of the terminal. Assuming no relevant inconsistencies were found by the security system when comparing at least two of the locations, and all the pre-authentication and pre-validation checks were found in consistent, reliable and order, the card system operators (the clearing house and the issuing bank) 8 may decide at their own discretion - also on the basis of their own checks and verifications - whether the card may be debited with the amount of money requested in the transaction. If this is the case the retailer receives the "OK" for the transaction and the transaction may be completed.
8) The customer may decide to continue to shop and leave the transaction window open. Alternatively the customer may decide to close the transaction window using the mobile terminal 1 and the mode of the card will be set to disabled again.

The above scheme is the generic procedure which can be adapted based on the standard card payment procedures actually in force. For example, some countries currently deviate from the above e.g. by not requiring a PIN Code in case the purchase does not exceed a token amount.

It will be appreciated that the verification of the location can be implemented without modifying existing boundary terminals and even without the knowledge of merchants. The verification of the location can be implemented by simple modification of the card system servers 8 by carrying out an additional check either based on location information previously provided or obtained on demand. Thus existing systems can be easily modified by adding the additional functionality to the one or few card servers 8 and by utilising a card holders existing mobile handset.

In addition, the security system described above may be further modified by the incorporation of the following features:
Feature 1: In between the steps 3 and 4, as mentioned above, a further security measure may be incorporated in the security system. Instead of fully relying on the data obtained by the card system from reading the card, the card system requests such data or asks for confirmation of said data from the MS which at that specific moment is a logical and functional part of the same transaction, i.e. payment validation process. Different variations are possible within this enhancement leading to an even more improved security.
   The advantages are obvious as the clearing house 8 receives data it obtains from two different sources. On the one hand data is received which is derived from the card which is used in a merchant POS terminal 11, which relies on a wireline network 12 like a DSL connection. On the other hand, it receives (confirmation) data from the MS 1 which is totally independent of the merchant's connection 12 as it is over a wireless network 10. Any attempt by a 3rd party to defraud the system without access to both the card, its verification details and the mobile device 1 and its verification details, would need to have gained access to two different communication networks, different terminal infrastructures and different overall systems at the same moment in time. Such situation is of course extremely unlikely or even impossible, particularly since GSM/UMTS communications may be (partly) encrypted.
Feature 2: In addition to the enhancement above or independent of it, a further security measure can be incorporated. Referring to step 6 discussed before and in particular to the POS terminal 11 functions in the payment process, an important improvement can be obtained by assigning similar identification characteristics as used within the MS to the POS terminal.

In other words if the POS 11, most likely in a portable version, was to be equipped with or attached to a GPS receiver in the form of e.g. an on-board device, the exact current location of the POS can be established in a way that is more reliable and more precise than the location by referencing IP addresses allows. This is particularly useful where the POS 11 may be portable and so its exact location is not fixed. Merchants offering cashless payments may be known to the acquirer through a (direct) contractual relationship with the acquirer enabling the acquirer to derive location information on the places where the merchant accept card payments.

Furthermore, in order to improve the indoor coverage of the GPS signals, Satellite Based Augmentation System (SBAS) functionality may be added by using the European Geostationary Navigation Overlay Service (EGNOS), the US Wide Area Augmentation System (WAAS) or any similar Differential GPS, DGPS, Assisted GPS, AGPS technologies or any variations of such technologies as well as devices that relay the GPS or GNSS signals. Such relay may comprise devices acting as pseudolites that are capable of producing pseudo-ranges. Moreover this procedure will enable the security system to relate the actual MS position with the actual current position of the POS terminal and a further vicinity plausibility check is now also possible.

Enabling precise and accurate location based security measures can be reliably achieved using GNSS technology. Other locating technologies do exist, such as using e.g. GSM/UMTS, WiFi and other terrestrial radio based technology. Other electronic direction finding instruments that may be useful include compasses, gyroscopes, accelerometer or pedometer components and Augmented Reality features using overlay data may be used to provide additional information to increase the accuracy of position establishment.

Some of these systems in themselves are currently less accurate than GNSS systems and so do not provide the same level of localisation and so lower security. In the future as they improve, such techniques could be used in the security system. In the very near future further accuracy and security related measures can be incorporated into the security system, when EGNOS becomes available. Even so, as a second factor security system, even low accuracy systems can provide additional security to counter fraud that is attempted from distances outside the effective range of such systems.

Furthermore it should be mentioned that currently the only full-coverage GNSS is the US financed GPS system. A 2nd system is currently in a pre-operational state, the Russian GLONASS, while the EU/ESA sponsored Galileo system may become available around 2013. Other countries like India, Japan and China are working on their own systems. Any future enhancement such as enhanced SBAS or new GNSS systems in combination (or not) with terrestrial based systems can be used to further optimise the accuracy and security of systems according to the present invention.

A possible improvement is to send "unprocessed" GNSS signals from the MS, and any other device that is to send location or GNSS information. By "unprocessed", it is meant that the signals sent by e.g. the MS do not contain a location in the form of a grid reference or so on, but instead they comprise the GNSS information necessary for such a location to be calculated. The skilled man will realise that some processing may actually take place in preparing this data, but the term is used to indicate that it is not the final result of usual GNSS processing that is sent. This improves the privacy of the system as the location is not transmitted in plain form, and also means that the system cannot be faked simply by sending the correct location as instead the correct GNSS information must be sent.

Feature 3: The security system 7 detects if the current combination of time, location and other parameters are in line with the predetermined conditions before it gives an OK (or authorisation) to the payment scheme that the card can be enabled for payments. Previously it has been mentioned that the card system has its own set of verification methodologies to decide whether the card payment request can be honoured.

In some cases, the security system may operate in such a way that it only sends an authorisation signal when e,g, the perimeter checks are complied with. In such a system, the absence of a signal would indicate that the transaction had not been authenticated.

This enhancement refers to the possibility by the card user or, in the case the card is a corporate card used by an employee or a card used by a child, by a card administrator, to further increase the security to define in more detail the times and places the card can be used, the global spending limits, the type of usage of the card and so on. These personal settings will usually reduce the available options attributed to the cardholder.

Such an additional layer of security can be achieved when the card owner or card administrator will be given the possibility to create independent database entries which can be read by the security system and/or the card system. Access to this independent database may itself be governed by the security system as a further factor of authentication, and may be transacted through a desktop or mobile PC like appliances and equipped with an online interface or other interface able to connect to an appropriate gateway that communicates directly or indirectly with the central security system or otherwise.

The security warranted by the multi-factor authentication, the enhanced authorisation and approval processes of the security system coupled with the traditional security mechanisms of the payment clearing system mean that payments of this kind now become highly secure. The combined security measures will thus reduce or even prevent the losses due to stolen or compromised credit and bank cards.

Of course, it is possible to envision a system that does not require the card to be entered into a payment enabled state - that is, the default for a card is payment enabled. Although such an embodiment would perhaps offer a lower level of security, it would be a very simple and unobtrusive system to be adopted by an end user. In such an arrangement, the card is always in the enabled state but the location verification step is still carried out at each transaction.

In the case of an ATM withdrawal using a credit/debit/cash card the process is similar to that above, with the boundary terminal 11 in this case being the ATM. The summary procedure is as follows:
1) The user sends to the security system a request, through the MS 1 via a wireless network 10, indicating that he intends to use a specific credit card to make a withdrawal. This procedure is virtually identical to the one for making a credit card payment. The user keys in a code into the MS to indicate which card the user wants to use as described above. After authentication with the unique DNA code a session (transaction time) window is opened and withdrawals can now be made. A system check is performed to define the precise location and the area or perimeter the user is currently in.
2) After the system checks were satisfactorily performed which comprises inter alia a coded handshake and encrypted exchange of keys, a transaction window is opened for a certain time within the system (and shown on the MS) and a payment session starts enabling the card for cash withdrawals. The user can now make an ATM request for an unlimited withdrawal if he wishes so.
3) The request that is made through the ATM (while the card is in a payment enabled mode) is processed by the clearing agent 8 and the usual card verifications will be performed by the payment scheme including the checks on the associated PIN, the card's validity and customer related issues, e.g. creditworthiness etc.
4) At the same time the security system monitors the ATM location (which is normally stationary and so can therefore be known to the central system) is in the vicinity of the MS. The ATM location may be known as a physical address or other location representation such as a set of Cartesian coordinates. The location of the ATM may further be known by virtue of its network connectivity or address as data is routed from the ATM to a central processing facility. Furthermore, the ATM may have GNSS or other location detecting functionality. The system continues to monitor the location of the MS during the ATM request. Inter alia the proximity between the user of the card (via the ATM location) and the MS is established.
5) The security system can use three different sets of location information, such as the MS location, physical address and network address of the ATM. Assuming no relevant inconsistencies were found by the security system when comparing at least two of the available locations and all the pre-authentication and pre-validation checks were found to be consistent, reliable and in order, the card system operators 8 (the clearing house and the issuing bank) may decide at their own discretion - also on the basis of their own checks and verifications - whether the cardholder is "good enough" for the amount he requested. If this is the case, the ATM will pay the amount requested, return the card to the user and close the ATM transaction.
6) Hereafter the security system is notified of the closure of the ATM transaction and may close its payment session accordingly by resetting the card into its default status, i.e. payments are not enabled. This automatic step is of course not necessary if the user wishes to keep the transaction window open, and the closure of the ATM transaction may instead result in, e.g. a query by the MS as to whether to keep the payment window open.

The transaction information provided by the user under the system described above comes from three different sources:
1) The first source is the card containing crucial information such as the card number
2) Second is the MS providing the payment enable session and the location related data
3) Finally, the cardholder provides the PIN code and the amount he would like to withdraw

The data from source 1 and 3 pass through the ATM and the communication network 12 before it arrives at the processing centre 8 of the clearing agent. In this scenario the ATM is the single component used to pass on the payment data to the system.

An improved security can be obtained when the payment data is split over two independent terminal stations and sent over two independent communication networks instead of one. If such protocol would be feasible without unduly burdening the process a user friendly security feature can be introduced.

Such feature may be integrated into the security system as it is possible to use the MS as the "terminal" that sends e.g. PIN Code and withdrawal amount to the clearing agent using another communication network 10 than the one the ATM is connected to. Moreover the security system can send these data in a strong hash encrypted format so that the four digit PIN and the amount is not human readable and only understood by the processing clearing agent.

Such a "dual-terminal" feature may also be useful during normal credit card transactions, allowing a user to e.g. enter their PIN on the MS or "sharing" card credentials with the other (POS) terminal potentially making it harder for criminals to see what the PIN is, providing a further level of security.

### The Security System with reference to the Card System

From the above summary description it is clear that the embodiment is not a stand-alone payment solution but complements current existing card systems, offering high security authentication features. It plays a dual role in providing first of all a mechanism to uniquely identify a device which in an unambiguous way is linked with a set of (personal) assets, i.e. in this case the client's bank accounts and associated cards, including credit cards.

Moreover the security system provides, executes and monitors a series of rules, procedures and protocols to shield the existing card systems from abuse, fraud and unauthorised access, thereby also functioning as a gatekeeper for the current systems. The main information exchanged with the existing card system is to signal if the outcome of the additional authentication and location checks entitles the requesting card-user to proceed with the traditional card transaction request

Together with the operators of the card systems, databases of card numbers and other details will be kept. The security system's databases however do not need to include any personal or other financial information such as creditworthiness of the card holder. Per card, and per group of cards e.g. belonging to an identical group of owners, a status code is stored by the security system. Basically 3 levels of card status are maintained:
1. A Black Status indicates that never under any circumstances the "enable payment mode" instruction may be triggered by the security system and optionally that any request to do so will be flagged as a serious threat to signal that further anti-fraud actions are required.
2. The White Status code groups all the card numbers that are now in payment enabled mode and that are being monitored by the security system, including the perimeter compliance control. Different variation levels of white codes may exist.
3. A Grey Status lists all the card numbers that enjoy security system privileges and which do not have any known issues and which are not enabled (as yet) for security reasons. They may migrate to a White Status whenever a session request is made but only if all the required associated conditions are met.

The security system's main role is as a gatekeeper to existing card systems offering sophisticated innovative features such as surveillance methodologies by using GNSS signalling and timing information thereby preventing a priori the fraudulent usage of bank and credit cards.

Card reader hardware and other equipment is installed in shops that is used to read and (pre-) validate card data at the edge or boundary of current card systems. The addresses of the shops may be known to the processor, banks or network operator through a contractual arrangement. These POS terminals accept the cards and their associated PIN codes (or alternatively confirmation from an operator that the signature supplied matches that on the card). These terminals communicate the information obtained to the operator or card processor of the card system (usually the clearing house), and they await a return message or code that indicates that payment has been verified and considered in order (or not).

This boundary terminal equipment installed at a merchant's premises is an important component of the current card system. Still the POS terminals are often the main target of hacker and criminal attacks due to the technology applied and the nature of the equipment. A similar remark can be made in respect of the numerous networked ATM terminals installed in nearly every country of the world. The ATM is in fact a combination of a card reader as described above and a cash dispenser.

Currently the card readers' function of the above terminals are a "soft spot" within the overall security of the payment scheme and series of measures have already been taken to improve the security of notably portable POS terminals. Still they are a vulnerable component not only because in the majority of cases these mobile terminals are connected to a merchant's base station using weak encrypted (or sometimes not even that) wireless connections. The relay of card numbers with the associated PINs over unsecured connections have already lead to serious problems whereby millions of cards and PINs were illegally recorded by gangs. A growing number of these POS terminals themselves have also been found to be modified such that they record the card details and PIN of any card passing through them, allowing criminals to easily harvest card details by replacing legitimate POS terminals with the modified variants.

Eavesdropping and other attacks on these networks are becoming a daily threat and at this level also hardware identity issues are a growing problem. Therefore, if not further improved from the security point of view, they may have had their longest time in terms of required system component.

With this in mind, technologies are now under development that will reduce the risks in terms of reading cards and transmitting them over a communications network. These technologies that inter alia address the need that the card must be in direct contact with the reader are focussed to offer methods with contactless technologies such as Radio-Frequency IDentification (RFID) and Near Field Communication (NFC).

It should be noted that modifying the payment scheme using different but single authentication will not really solve the weaknesses of the present payment scheme and unless a multi-factor authentication based on, if possible, independent communication means will be deployed any payment scheme remains vulnerable to this kind of abuse and fraud. The security system will still be able to provide a second, security-increasing authentication factor. Even if such technology like NFC was incorporated into the MS, having a requirement to enter e.g. a further PIN into the MS in order to open a payment window means that theft of the MS and the primary authentication details (e.g. a PIN to be entered into a terminal), the security system is not necessarily compromised.

Current card systems must make use of (usually) wired communication facilities for their system components such as the communication via a standard Public Switched Telephone Network (PSTN) line in combination with a modem device, a dedicated PSTN telephone line with communication capabilities (analogue or digital (Integrated Services Digital Network or ISDN)) or via IP techniques using DSL (Digital Subscriber Line) or similar technologies and eventually supplemented by router and/or switching equipment.

During recent years a shift can be seen in the use of the communications networks that are deployed for POS and ATM terminals as well as for other communication requirements within the card systems. The need for "always-on" connections resulted in the change from traditional PSTN to IP centric solutions and secondly more and more mobile POS terminals are being used.

The traditional card systems, which were well protected in a closed and wireline PSTN environment, are now also facing the threats of IP communications (often using the standard, open internet protocols) and wireless communication links between the terminals and the local base stations.

There is therefore a need for an independent communication channel that relays sensitive data in a secure method to overcome many of the security issues currently being faced by current systems. The security system described here uses such an independent communication channel in the form of GSM/UMTS technology providing for options to request independent confirmation or for relay of data deliberately broken into separate blocks to limit the risks of eavesdropping.

Moreover a further alternative is offered by the security system. Complementary communications between the MS and the central server can also be provided by non-terrestrial communications such as by satellite communications. Space technology companies are introducing a new such technology using the S-band (2.0 to 2.2 GHz) frequency spectrum recently allotted by the EU regulator.

This allows the use of satellite communications instead of GSM/UMTS technologies for the security system. Not only will S-band technology offer downlink capabilities it can even be configured so that return channel features become available making terrestrial communications totally obsolete.

When coupling this technology with other wireless but terrestrial technologies certain weaknesses of the current GPS system in terms of indoor coverage can be improved and the security system would benefit accordingly.

The core system used by the security system to locate and position of the MS and terminal devices is the current GPS satellite system. The use of these so-called GNSS earth orbiting satellites will see an enormous expansion in terms of numbers of space vehicles as well as services in the coming years. Presently they form a highly accurate, reliable and secure base for the provision of these elementary data to the security system.

Still alternative sources exist and the security system will also be able to operate with other terrestrial radio networks if needed. Especially in a hybrid configuration whereby two or more different technologies are used in combination and supplementing each other may prove to offer a good alternative. These technologies that may be useful include the wireless 802.11x IEEE (Institute of Electrical and Electronics Engineers) standard and the 802.16 WiMAX (Worldwide Interoperability for Microwave Access) standard. In the future, other communication and/or ranging techniques such as those using laser of microwave radiation may be practically applied to the present invention.

The details and examples given herein use some way of authentication based on the exchange of encrypted positioning information. Other encrypted information derived from data that has been processed to uniquely identify an object, person or transaction may also be used.

The identity verification may also be performed in combination with other known methods such as biometric verifications methods including fingerprint recognition or retinal or full hand scans, voice or facial recognition systems etc.

Under certain circumstances such as access to high security sub-surface areas where radio networks are not available these known identity verification methods may prove useful in combination with the other security system features thereby allowing the security system to continue to validate the authenticity of a transaction based on these further identifying criteria, rather than necessarily geographical proximity (although the location of the MS upon losing the radio network signal may be useful when a limited time period has lapsed).

It should be underlined that a major advantage of this embodiment is that it will use the current existing card systems and infrastructure without requiring major changes or additions to it and its deployment does not need the complete redesign, overhaul and/or total replacement of the existing credit card or ATM/POS systems. The new security system only requires small upgrades to current hardware, software, procedures and systems that can be made within the schedule of planned maintenance.

Areas where these systems may require an upgrade are likely to be at the boundaries of the system, i.e. the terminals as well as at the transaction procedural level. In fact, current systems depend on a global network of heterogeneous ATM or POS terminals which may require some minor upgrades. This can easily be done and can be part of the usual applicable regular maintenance cycle for this equipment. Similar considerations are valid for core components of current systems.

Furthermore as this embodiment is an add-on to the present systems it will remain within the technical boundaries of the present systems and will continue to require the full support of the operators of the current systems (i.e. banks, credit card companies and clearing agents). Therefore it does not compete with present systems.

It is also important is to underline this embodiment's user friendliness in that it does not require a complex system or involve new and different hardware. The user's attitude towards the use of their cell phone, their credit card and the boundary devices such as their bank's ATMs and the merchant's POS terminal remains substantially the same, with the exception of including an extra step at e.g. the beginning and end of a shopping trip to enable and disable a card, the latter may in any case be invoked by the security system after a certain period has lapsed. In a potential, although less secure, alternative to the present embodiment where the card is in a default enabled state, or enabled in for example certain areas such as the office or a shopping centre, the user need not do anything with their cell phone except carry it with them, which many people do as a matter of course.

The GNSS enabled mobile handset is currently not part of the card systems. Furthermore, the availability of this multipurpose device not exclusively used for payment transactions is an important factor for this invention to be adopted by the public, and its user friendliness. However GNSS enabled mobile handsets are becoming increasingly common, and the announcement of the current market leader Nokia that 40% of their phones that will be sold in 2008 have a GPS receiver inside backs this view.

The different core components of the security system, with reference to figure 1, are as follows:
1) The basis of the security system is a GNSS enabled cell phone 1 or equivalent that contains a (possibly embedded) piece of software and a security protocol making the cell phone absolutely uniquely identifiable by the security system and by authorised other parties such as the payment scheme's clearing house. The fingerprinting of individual components in the first instance and the subsequent second step of including GNSS time stamping signals and constellations or other locating data to create the so-called DNA signature is extremely powerful and can be used in many different areas. The DNA is preferably extremely very well encrypted and protected. The MS element of the security system allows two-factor authentication without requiring additional security token devices.
2) The existing ATM and credit card terminal infrastructure 11 can be used with only a slight adaptation via some software upgrade. The Clearing and Settlement Agent operating the payment network(s) will have to deploy a few new security measures and certain software will need minimal upgrades to cater for the new layer of security, and the enable/disable functionality of the security system.
3) Some adaptations need to be made to the operations and back-end systems 8 currently in place and operated by the Authorising Bank or Credit Card Company and the Clearing Agent.

### The DNA Sequence

The DNA used to identify the MS (or boundary terminals) can be a simple identifier for the MS but can play an important element in the security of the system. The method used for sequencing the unique DNA structure of the cellular phone (or similar device) may use, in part, the GNSS system. In such an embodiment, the device DNA is sequenced or "manufactured" by adding, mixing and injecting different device and radio network connection derived system characteristics. The unique GNSS timing signals in conjunction with their in-orbit constellation forms the basis of this important and unique component.

Of course, in other (less secure) embodiments, the unique identifier or DNA may be based on other information or factors, such as telephone number in the case of a cell phone, and may even not include GNSS information; in which case the GNSS information would be transmitted separately from the DNA. In such a case, the GNSS information may be processed location data, meaning only e.g. latitude and longitude information need to be sent to the security system central component. Equally the GNSS data may be raw unprocessed data which is sent to the security server 7 for processing there.

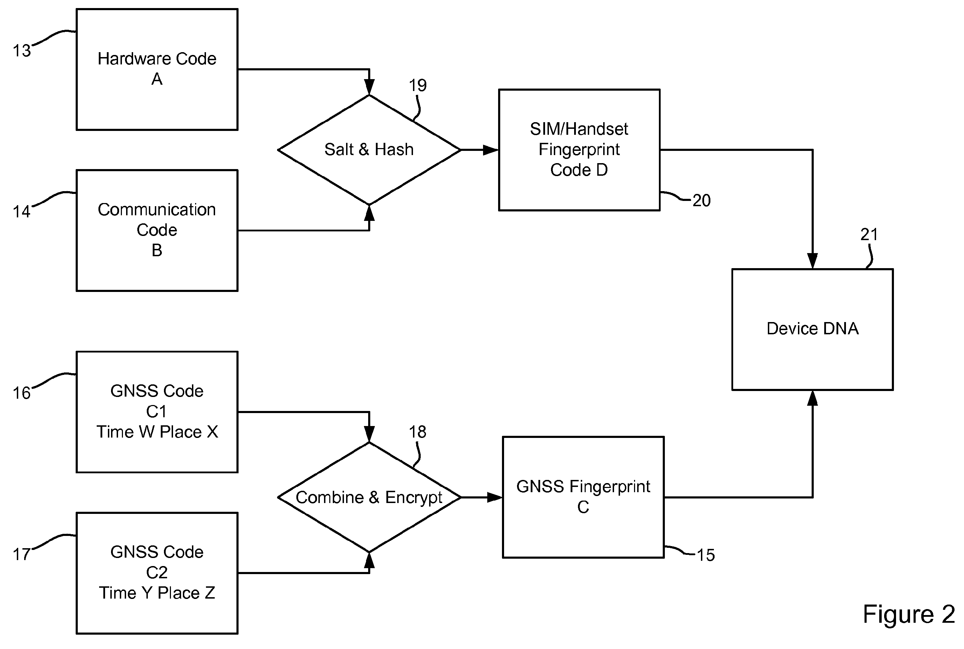

Reference is made to figure 2. In this embodiment, three ingredients or fingerprints are required to establish the device DNA:
1) Fingerprint code A 13 is based on identification elements of the hardware of the MS such as the equivalent of the IMEI (International Mobile Equipment Identity = the serial number of a cellular phone).
2) Fingerprint Code B 14 is based on similar elements relating to the radio link and, in a GSM/UMTS network, the SIM (Subscriber Identity Module) card which is put into the device such as the IMSI (International Mobile Subscriber Identity = identifier of the SIM) is used.
3) Fingerprint Code C 15 is the most advanced fingerprint and is generated on the basis of unique time-stamped GPS system message data that is continuously broadcasted by each individual satellite of the GNSS system (note GNSS is currently equivalent to GPS but this will soon be complemented with other satellite based location systems). This data may be raw constellation and timing data, or in other embodiments may be processed to provide location data or otherwise.

In this particular embodiment, Fingerprint Code C 15 is actually derived from two codes, C1 16 and C2 17. Potential modifications to the invention may use either more of such codes or rounds, or even only one. These relate to the constellation arrangement (that is, the in-orbit position of the satellites) and timing data at two separate places and moments in time. C1 in this case is the constellation and timing at a given time, such as on setting up the MS or first registering it with the security system. The second round C2 may be recorded at a different moment in time (preferably measured 45 minutes later or more), and most likely in a different location, as this leads to a suitably separate data point. The main concern in the difference between C1 and C2 is that the satellite constellations are preferably significantly different, and so the location at which they are measured is less important if enough time is left between measurements to change the satellite constellation significantly. Code C1 and C2 will be merged and encrypted 18 into a Code C using, for example, AES encryption whereby the key is derived from parts of certain GNSS messages. These are composed of blocks and certain blocks or parts of these blocks are taken to serve as the encryption key.

Fingerprint Codes A and B are transformed and complemented with random "noise" or "salt" and hashed 19 into a Fingerprint Code D 20. The latter plus Fingerprint Code C are combined and sequenced into the device DNA 21 using encryption techniques which make the MS identity unique and unbreakable (using today's available techniques).

A different way of looking at the DNA sequence of a MS is its comprising of two fingerprints. The first fingerprint, the SIM/Handset fingerprint 20, relates to the device and the SIM data/codes, and may be a highly secure hashed fingerprint that need only be calculated on initialisation or association with a card. The second fingerprint is the GNSS signal fingerprint 15. In this embodiment, it is described as being the locations of at least four satellites at two different points in time and geographical locations, including the exact times. However, this could be any data or information derived from the GNSS signals, such as a processed location as mentioned above. As this data is variable and less important for identifying the device itself (which is already uniquely identified by the first fingerprint), the encryption and security methods used may be reduced or non-existent for processing efficiency. Of course, the inclusion of fingerprint C improves security, particularly as it is determined by the system based on GNSS information and not based on information originating from another third party (as the serial numbers do).

Furthermore, to simplify the transition process e.g. when a user buys a new MS and transfers their SIM, it is actually possible to envisage the first fingerprint being simply a SIM fingerprint, that is to say Fingerprint code A 13 would not be used to authenticate the MS. However, this may in itself introduce additional security problems, and would result in a system that could be defrauded if the SIM identifier e.g. IMSI could be cloned onto a copy SIM. Furthermore, the GNSS data would not be included on the SIM and thus fingerprint C would need to be recreated and registered, unless the data was held on a removable data card - which would in itself pose an additional security risk.

In addition to partly using the embedded security features of the GSM/UMTS network (i.e. encryption techniques, partially secure data-links, and a system identifiers and randomiser which is related to the SIM card) use is also made of high security AES (Advanced Encryption Standard) cryptography and state-of-the-art hashing methodologies optionally with VPN-like tunnelling techniques.

The Advanced Encryption Standard (AES) is an industry standard symmetric-key with block cipher algorithm. This standard, which has been approved by the US National Institute of Standards and Technology NIST in 2001, has become worldwide the de facto encryption methodology. AES, which is in fact a sub-set of the Rijndael algorithm, exists in different variations using different key sizes, 128, 192 or 256 bits long. For all the three different variations a standard block size of 128 bits is used. In this embodiment, the security system assumes the use of the AES 256 version with the standard 128 bit block size.

Hashing is a kind of one-way encryption acting like a random process and producing one single unique result on the basis of a given input which does not allow the restoration of the original input. As previously mentioned the security system uses different hash functions to strengthen its security and to reduce its dependency on a single function. The hash functions may be used separately and individually or may be cascaded utilising different functions in sequence.

Specifically, in this embodiment, Fingerprints A & B, 13 & 14, are salted with IMSI data and then hashed independently using a first algorithm. These two hashes are then combined and hashed using a second algorithm, resulting in fingerprint D 20. The original information is then discarded, as fingerprint D is what is actually used in the DNA.

Fingerprint C 15 is made from fingerprints C1 and C2, 16 and 17. C1 and C2 each comprise 4 complete message streams from 4 GPS satellites (one stream per satellite), preferably comprising 5 messages each. Different numbers of satellites and messages may be used in other embodiments, which may improve the security of the system if more satellites are used. When C1 and C2 are obtained, they are combined by frame (1500 bits of GPS data, which takes 30 s to send) and message before being encrypted using AES to form fingerprint C. Fingerprint C is then hashed in cascade with two algorithms.

As such, it is actually the raw, unprocessed GNSS data that is being used in this embodiment in the identifier. C1 is preferably data derived from a fixed, known location that is used when initialising the DNA, and may be used for identifying the MS. This data will be different if an appreciable period of time expires between any two measurements taken from this location. C2 may be the location of the MS at any particular point in time, and hence be used in locating the MS, or a different fixed location that further identifies the device. If the MS transmits timing data in relation to the raw GNSS data, for example the relative times of arrival of each message, the receiving device can calculate its location from the transmitted data. As mentioned elsewhere, the device DNA could be made using only fingerprint D, with location information (be it unprocessed GNSS data, data processed to provide a location, encrypted or otherwise) being sent separately once the identity of the MS is confirmed. However, the GNSS provides a useful source of identifying data that is difficult to fake. Furthermore, the use in this embodiment of raw GNSS data sent by the MS makes the system more difficult to defraud. In particular, whilst it is easy for a criminal to send a claimed grid reference or latitude/longitude to a remote server to fake the presence of an MS at the location of an attempted fraudulent transaction, it is much more difficult for the criminal to calculate the GNSS data and timing for that location at a given point of time, without actually being there. As such, protection is offered against "replay" attacks, in which a signal that was previously used e.g. to permit a transaction is replayed, in order to have the same effect. Furthermore, as there will normally be more than four satellites "visible" to a receiver at any one time, a predetermined preference for certain satellites may be established, so that anyone wishing to produce GNSS data to defraud the system must also know which of the visible satellites are preferred in order to successfully trick the system.

Before transmitting fingerprint D, it is encrypted using a SIM encryption key. The remote security server or mobile operator (receiver) will also have a similarly encrypted key for authenticating the validity of the ID being provided. Fingerprint C can then be further encrypted using AES with the encrypted fingerprint D being the key. Upon receiving the encrypted fingerprint C, it can use encrypted fingerprint D (which it has compared with its own data) to decrypt fingerprint C. Cryptographic nonces, based on the GNSS data, may be used to relay information between the various components. Furthermore, the receiver may transmit its own record of fingerprint D with which it is validating the MS to the MS in a suitably encrypted format to allow the MS to confirm that it is dealing with a genuine receiver. This form of communication may also be spread to the central server of the card system, and involve transmission of existing or re-calculated fingerprints and encrypted fingerprints between the various components to confirm that they are "in synch".

Three different hash functions suitable for the security system are listed below as an illustration. The skilled man will realise that they may be replaced by other future functions coming available; All three are presently not compromised and do not have any significant known weaknesses:
a. RIPEMD-160
b. SHA-512
c. Whirlpool

RIPEMD-160 (RACE [Research and development in Advanced Communications technologies in Europe] Integrity Primitives Evaluation Message Digest) is a strengthened version of the original RIPEMD developed under the EU's RIPE programme. RIPEMD-160 has a fixed output of 160 bits and has been adopted by ISO (International Organisation for Standardisation) and the IEC (International Electrotechnical Commission) as an international standard.

The SHA-512 algorithm has been developed by the US NSA (National Security Agency) and adopted by the NIST (National Institute of Standards and Technology) in 2002. It has a fixed output of 512 bits.

Whirlpool as used by the security system is the third and final version of the function initially developed as a contender in the NESSIE (New European Schemes for Signatures, Integrity and Encryption) project. This version has a 512-bit long output and is adopted by the ISO and the IEC as an international standard.

These cryptography and hash methods have not been compromised to date and in view of the fact that they all comply with the highest international (and military) standards the likelihood of compromise is considered more than remote on the basis of the current state of computer technology. Of course, other cryptographic and hashing algorithms may be appropriate depending on their security and ease of use, and may become useful as the technology or field of cryptography progresses.

Furthermore the security system uses more than one hashing method and their underlying calculation principles completely differ from each other. Moreover they are used sometimes individually but also in a cascading manner. Thus even if one of the hashing methods might be compromised in the near future it is extremely unlikely that all three will be compromised at the same moment in time.

Within the security system the unique GNSS timing and positioning technologies play an important role on three different distinct levels while ensuring that the system's monitoring services will always be capable to checking the consistency between the DNA, the reverse localisation and the communication tunnel. This is possible by determining a unique reproducible key by "extracting" it from to the three different stages mentioned before thereby warranting the integrity of the security system in relation to the individual transaction requests.

### A) On the MS level

The MS is a mobile device such as a cellular phone, a Personal Digital Assistant (PDA) or a Personal Navigation Device (PND) with telecommunication capabilities or similar devices together with a GNSS receiver, either integral to the device or connected. After the initialisation and set-up of the MS a device unique DNA is produced which is used by the software on the device, and the central components of the security system, for the core authentication and validation of the MS device. This DNA may be further updated as the GNSS data changes.

The DNA production is a highly secure process where, depending on the number of rounds, random raw data is obtained for use in the DNA at different times and locations. These raw data are derived from the combination of GNSS timing signals and the satellites' unique once-in-a-lifetime constellations in combination with hardware and communication specific elements.

This means that this embodiment of the security system does not use location data processed by a GNSS receiver as its basis. The raw message data broadcasted by the GNSS system is used, enabling the security system to independently calculate from the MS a more accurate positioning of the reception equipment thereby closing the doors for traditional attacks such as spoofing, man-in-the-middle, replay and similar techniques.

By using the DNA in conjunction with the device the security system will now be able to authenticate the integrity and trustworthiness of the data and its origin and will shield the payment scheme from intrusion by unauthorised parties in addition to the authentication and validation of the MS device as mentioned earlier.

Whenever a Commercial Off-The-Shelf (COTS) MS device with so called EGNOS (European Geostationary Navigation Overlay Service) functionality becomes available the MS device will have even better access to improved accuracy capabilities and this extra feature will enhance the DNA quality even further enabling the security system to establish with an even higher accuracy the MS position, the integrity of the relayed data and thus improving the perimeter compliance possibilities of the MS amongst others.

The EGNOS and Galileo systems will also enable a new security system feature, improved integrity compliance, in which the location data derived from the different GNSSs can be compared. This feature complements the system's perimeter compliance and integrity tests and will improve security to yet another level. The MS may optionally include an E112/eCall (the provision of location data on calling 112 in the EU) kind of functionality useful when the device is stolen. This EGNOS functionality will become available to all SBAS (Satellite Based Augmented System) compliant technologies such as the already operational US WAAS.

### B) On the system level

The current card system infrastructure will need some upgrades, notably the association of GNSS coordinates with the POS and ATM terminals if not already available. This may be a one-time operation for stationary terminals, or alternatively involve integration with some GNSS receiving equipment, for example in the case of mobile terminals. The software (and possibly hardware) may also need to be updated to enable the implementation of the new security features, including the enable/disable status of the credit card and the check of the precise location of the MS at the moment of the transaction requests, the virtual geographical perimeter in which the card and the MS device need to be as well as the integrity compliance which inter alia will be validating the proper source and quality of the GNSS signals.

As previously described the security system may establishes the position of the MS at the remote central facility in lieu of relying on the built-in position capabilities of the GNSS receiver. The processing of the GNSS data may thus be performed using additional data that is available such as SBAS data.

The MS may relay (partial) data sets (comprising Space Vehicle, clock correction and ephemeris data) and not so-called almanac data to the central facility that keeps elaborated databases of the complete message streams so that on the basis of limited data a full position calculation can be produced that is first of all more accurate (using more constellation and other such as SBAS data and the better computational power centrally available) and is secondly more secure. Even if a perpetrator would be capable to break into the secured link, he will not be able to see the MS position as he only sees partial data sets which in itself will not reveal the current position.

This process has an additional advantage compared to the standard procedure as no position information is relayed to a central node. The above described "reverse location" establishment methodology helps prevent such an attack and protects the privacy of the user and may help the provider of such location based service remains compliant to any data protection legislation in such matter.

Naturally the usual payment procedures and rules currently in place and applied by the banks and clearing agents must be adhered to as well before the bank customer will be in a position to properly execute a payment or a withdrawal.

Reference has already been made to upgrading the terminal devices in the form of (portable) POS terminals and the ATM equipment with GPS and eventually SBAS functionality. By equipping these terminals with GNSS receiver equipment card readers which now are increasingly being manipulated and tampered with can undergo similar DNA sequencing as the MS to ensure the unique identification of the equipment. Such identification will improve authentication procedures especially in the case of portable POS equipment.

The system's monitoring features are capable to identify specific geographical areas where card usage may be particularly prone to fraud and abuse at a given moment in time. Contrary to existing profiling system used by the major card operators, the security system will be capable to avoid card fraud losses by inter alia identifying those users who have enabled their card to "on". Such condition indicates that they are in a pre-stage of requesting payment authorisation and the system may warn these users of the potential dangers in respect of using their card in that particular area. In certain cases the system may decide to switch the card "off" when the situation would require so.

### C) On the operators' level

The traditional main operators of such card systems are:
1) The Authorising Bank (where the user is customer) or
2) The Company that issues the credit cards (whereby this may be identical to the above)and
3) The Clearing Agent responsible for the transactions

In addition to the currently existing interchange of payment transaction information between the parties, supplementary GNSS and security system related data (such as the DNA) can be communicated. The messages will contain information on the transaction window plus any other data needed to perform the checks securing the integrity of the security system.

In this context it should be remarked that the European system using a Clearing House settlement agent is not always identical to systems in other countries or regions in the world. Often, like in the USA the netting and clearance is directly settled between banks and the money flow is between an "acquiring" and an "issuing" bank. This however does not have an effect on the methods employed by the present embodiment.

Also in such an organisational set-up, the majority of the modifications that need to be made in order to make the current card system compliant with and ready for the security system of the present invention are strictly of a procedural and organisational nature. The majority of measures will have to be implemented in the back end of the current payment schemes. The identification methodology using GNSS satellite positions in orbit produces an identifier which is based on an in-space satellite constellation that will never occur again due to the fact that inter alia exact identical GNSS satellite constellations and positions involving the same in-space satellites will never reoccur.

Hereafter a brief summary is given why such a constellation will never reoccur and why as a result the identifier will be unique and cannot be reverse engineered.

As part of the DNA sequencing procedure the security system uses two different sets of GNSS data (until the availability of other GNSS systems the GPS signals are used) that may be derived from 4 different satellites each. A one-round sequencing meaning at one location at one single moment, a two round sequencing meaning at two different constellations recorded at two different moments in time etc.

In order to be sure that the constellation positions can be used as an absolutely unique identifier it is important to understand if the GNSS satellites will ever be in the same orbital position again; and if so to what extent this applies to a set of 4 different satellites (noting that the GPS system uses some 30 satellites to complete full system coverage).

In order to understand the context one needs to consult the basics of celestial mechanics. If the satellites were point masses, and the planet earth were the only gravitational source in the universe, and if it had a perfectly spherically symmetric gravitational field, and if there were no magnetic fields, no atmosphere, no other forces, then the satellites would follow perfect Keplerian orbits. Since the universe contains a huge number of other objects, each exerting gravitational forces on each satellite and planet Earth has a decidedly non-spherically symmetric gravitational field, the positions are non-repeating (using an earth-centred frame).

There are other forces, like radiation pressure, atmospheric drag, and the geomagnetic field as well as relativistic effects. Because of all these various forces, adjustments are made to the orbits of the satellites from time to time to keep the satellites close to their nominal 12 sidereal hour orbits, in the assigned orbital planes, and in the assigned slots within the plane.

The nominal orbital period of all vehicles in the GPS constellation is 12 sidereal hours. To the extent that they are all at the correct period, the locations of the satellites repeat every 12 sidereal hours. The variation in the orbital parameters is the reason that the navigation messages broadcast gives the current set of orbital elements. The small amount of deviation that builds up between the time the navigation message is updated and the time at which you are making your position observation is one of the contributors to the inherent error budget.

Moreover a further important element of GNSS satellite systems can be found in the ultra accurate atomic clocks on board of the space vehicles. These clocks record time at a level of accuracy unheard of before the introduction of GPS in the 1980s. The GNSS time is so accurate that it deviates from the time recording we have been using in daily life and in fact there is a synchronisation process required between GNSS time and UTC time. This is a result of the introduction of "leap seconds" into the time used in daily life as a result of the slowing of the Earth's rotation.

The combination of a per satellite unique orbit which never repeats itself plus the ultra accurate GNSS time which continuously progresses and where the same time will never reoccur means that the combination of positioning data of four or more different satellites captured at one or more distinct different moments in time (and possibly locations) will warrant a unique result.

### The Card System Terminals

POS Terminals and ATMs are referred to in this document as "terminals", which phrase can be used to include any equipment that operates at the border or edge of an electronic system to guard in some way or another a protected zone or zones. In current systems, these terminals accept one authentication key, be it a PIN code; a confirmation from a merchant that a supplied signature matches that on the card; or any other method such as electronic signature detection, biometric identifying equipment etc. The principles described here with reference to ATMs and POS terminals may be readily adapted to any other terminal.

Automatic Teller Machines (ATM) comprise a card reader component, a cash dispenser part and sometimes proprietary or off the shelf software running on an (often) Windows Operating System. Usually they are interconnected through a wireline telecommunication network and thus have access to real time updated information stored in the card systems' central databases.

Recent estimations of the number of ATM terminals used within 20 of the EU-27 countries made by an ATM security working group of the EU estimated the number of installed ATMs at 337,000 in mid-2007. According to the same group, it is safe to assume that within the 31 SEPA countries the number of installed ATMs is over 362,000 of which two thirds are in the UK, Spain, Germany, France and Italy.

ATM terminals are not standardised and no common certification exists across the SEPA countries which means that common actions against fraud deploying technical means are rather complicated to agree upon and to deploy. Until now not even the agreed measures in the framework of SEPA have been implemented by all countries, this being an indication of the administrative complexity.

The different interest groups within the different EU countries have problems agreeing on a series of common measures to combat the fraud that is currently spreading at an alarming speed.

SEPA countries that implement the ATM SEPA requirements such as the EMV (Europay, Mastercard and VISA) initially reported lower losses due to the difficulties of abusing these improved cards despite the fact that still over 80.000 ATM terminals are as yet not EMV compliant.

However on the basis of statistics released in May 2008, monetary losses are again dramatically rising while the number of attempts has decreased dramatically. This is a clear signal that security measures have now been overtaken again by professional gangs who know how these improved systems can be defrauded.

A further sign of the problem is that on top of criminal gangs, now terrorist organisations are fully exploiting the loopholes in these systems. Terrorist gangs have successfully planted highly sophisticated small electronic bugs in POS terminals that were installed at supermarkets across the UK and continental Europe that intelligently cloned customers' data and transmitted them via a wireless link to a remote server. These "embedded" bugs were even remotely reprogrammable so that cloning patterns could be randomly changed.

Counter-action is often late in properly responding and measures are too often inadequate. A good example of measures that are taken on the basis of the lowest common denominator principle is the choice for the encryption technology that should be deployed at ATM level. It has been decided to use the Triple DES technology as encryption standard, despite the fact that it should be known that Triple DES is slow and already compromised.

Regarding POS or Point of Sales terminals, the installed base situation is unknown and no reliable statistics are available as to their number within the EU while in some instances mobile terminals are used that are officially not registered as such. POS equipment, in fact a simple card reader device that can be purchased in any electronic shop for less than € 50 is manufactured by mass market electronics manufacturers usually in Asian countries and therefore any attempt to try to standardise these systems will clearly fail.

POS terminals used by merchants must have a higher degree of security and are usually certified by the operator of a POS network and merchants want to be sure of the integrity and proper functioning of the POS. However a similar attitude towards these POS terminals can be observed as with telephone handsets in the past. Users were obliged to only call using the telecom operator certified equipment but many disregarded this and used non certified phones, leading to sometimes serious disturbances of the PSTN network. The introduction of portable POS terminals communicating with a base station over a wireless network has resulted in many problems due to the fact that the wireless communication was not protected and card with PIN information was sent in the clear ready for anyone with a laptop to pick up this data.

Basically the security problems surrounding POS equipment is very similar to those associated with ATM terminals. Attacks on ATM and POS terminals usually take the form of
- Skimming
- Fake and replica devices
- PIN capture
- Card hacking during transaction
- Card and cash trapping
- Transaction reversal

Any cardholder including those that uses the enhanced security system described above can fall victim to these manipulations of the hardware, as the equipment is not sufficiently protected and the authentication of these devices is not warranted. It is assuring however that the cardholder using the security system above will notice that despite the theft of his card details, his bank nor the cardholder himself will incur any losses due to the protection mechanisms deployed. This is not the case for those not using the security system.

In this respect it should be mentioned that some of the system operators do not always comply with basic preventive measures to combat fraud. It is counter productive when obsolete equipment is not destroyed but sold into the second hand market. De-installed ATM equipment is for sale at eBay and other internet sites and it is evident that such equipment may be used to abuse the payment system by simply impersonating a real genuine ATM making skimming very simple.

The easy ways POS and ATM terminals can be tampered with partially lies in the non standardisation and not uniform certification of the terminal equipment. Especially regarding the POS terminals one can speak of a proliferation of available equipment some of which do not adhere to the most basic security standards.

The technology used to generate the DNA for the MS equipment to produce a unique identifier and authentication token may also be applied to ATM and POS equipment. The device requires inter alia two way communication capabilities, such as over a radio network, and a built-in or connected GPS (or rather GNSS receiver) enabling the positioning and GNSS fingerprinting of the device.

Both ATM and POS have the two way communication capabilities, usually over a wireline connection, whereby it should be noted that a portable POS also has a wireless section to bridge (between the POS and base unit). The main element that is missing is the GPS receiver.

GPS receivers are now available "on-a-chip" and are as cheap as € 8 when bought in certain quantities. This means that there is no real inhibiting factor to equip GPS receiving chips in a POS. For ATM equipment, in view of their investment and operational cost such amount is clearly marginal. On top of this, ATMs are normally fixed and stationary so that their exact location is known anyway. As such, the requirement for a GNSS receiver may be avoided by initialising the DNA of the device using a connectable receiver, although this removes some of the potential benefits of the system. However, in such scenario the ATM would not be able to collect actual raw constellation data in normal use.

Producing the ATM terminal DNA is a process that is similar to the procedures that need to be followed for the MS device. Individual operators each have a responsibility for creating such DNA and in the case of the ATM the following steps are required in this embodiment:
a) The trusted ATM manufacturer installs the required GPS hardware and will also be responsible for installing a security system component. This is usually software but may also be a hardware component like an ASIC, containing certain procedural instructions;
b) Upon installing the operating system and application software, the instructions will - in analogy with the MS device hardware Fingerprint Code A procedure - produce an equivalent hardware fingerprint for the terminal reading specific hardware information;
c) Hereafter, at the manufacturer's production site the first part of the GNSS Fingerprint Code C, i.e. C1 is produced;
d) After the ATM has been shipped to the place of installation the following steps are required before the ATM is put into operation;
e) The ATM will be connected to the telecommunication network to enable the processing of withdrawal requests. Upon the establishment of the definite ATM configuration, the secure software (or the ASIC etc. for that matter) will be triggered and the communication Fingerprint Code B is established;
f) In addition the 2nd GNSS constellation dataset can now be obtained and the Fingerprint Code C2 is produced - Note that here a clear distinction of place and time of the constellation data is evident;
g) Now a similar procedure to generate the device DNA is followed as in the case of a MS device, whereby Code A and Code B will be transformed, complemented, noised and salted to arrive at a hashed Code D;
h) Code C is produced by taking Code C1 and merging this with Code C2 using AES encryption and taking certain message data as the passkey. As AES-256 is used this passkey is 256 bits long whereby the Codes C1 and C2 are sized into blocks of 128 bits long. The result is hashed in cascade to arrive at the Code C;
i) In this ATM example, the combined Code D typically refers to the ATM device as such, while the Code C refers to the ATM that at a given time and moment was located at one location where a certain 4 satellites constellation existed and at another time and moment at another location where a further 4 satellites constellation existed; and
j) Putting Code C and Code D together to produce a unique ATM DNA

As can be expected, the POS procedure is somewhat different due to the diversity of available hardware and the possible unfriendly environment where the POS will be installed. First of all the DNA sequencing will only be possible with hardware that complies with a minimum set of security standards. Secondly these POS terminals must have a system design that enables the inclusion of a GPS receiver and warrants that the security components will remain internal. Other requirements may be defined also on the basis of certification granted by recognised certification authorities. Of course other, more lax standards could be used, but in such embodiments the system is likely to offer substantially less security.
a) The POS operator installs the required GPS hardware and will also be responsible to install a security system component in pre-validated POS terminal equipment. The hardware independent security software will be embedded to the extent possible to avoid that software code is hacked and abused to simulate the DNA sequencing
b) Before installing the POS equipment at the merchant's site the POS operator will have to trigger the production of the Fingerprint Code A, identical to the procedure applicable for the MS and ATM devices and based on device internal characteristics
c) Hereafter still at the site of the POS operator the first part of the GNSS Fingerprint Code C1 is produced
d) After the POS has been installed at the merchant's site the following steps are required before the POS is put into operation
e) The POS will be connected to the telecommunication network to enable the processing of payment requests. Upon the establishment of the definite POS configuration (portable and base station), the secure software will be triggered and the communication Fingerprint Code B is established
f) Hereafter the 2nd GNSS constellation dataset can be obtained and the Fingerprint Code C2 is produced. Note that also in the POS case a clear distinction of place and time of the constellation data is evident
g) Now a similar procedure to generate the device DNA is followed as the MS or ATM. Code A and Code B will be transformed, complemented, noised and salted to arrive at a hashed Code D
h) Code C is produced by taking Code C1 and merging this with Code C2 using AES encryption and taking certain message data as the passkey. Note that Rijndael, the origin of AES was developed to run on a smartcard so AES is a small and versatile technique that can be used in a low tech environment such as a POS. Using a 256-bit long passkey and cascaded hash functions, Code C is generated
i) Putting Code C and Code D together produces a unique POS DNA

After the upgrade of the ATM and POS terminals functioning as boundary hardware in the traditional card systems with their unique device DNA a series of additional security options become available. Hereafter follows a summary of the additional security features that can be implemented within the secure card system:
First of all, the addition of GNSS functionality in conjunction with the secure system allows improved and authenticated monitoring of the exact location of the terminal equipment as regular automated checks can be performed by the central system regarding the whereabouts of the unique ATM or POS device together with the status condition of the ATM/POS (e.g. not malfunctioning, not tampered with and in the case of an ATM the availability of sufficient money etc.). This may be used in setting up authentication services for visiting persons and tourists as an example.

A further security feature is provided in case a careless cardholder uses without knowing a fake or replica ATM terminal that copies card details for use by criminal gangs. In such case the user will notice that the requested transaction (i.e. the cash withdrawal) is not executed and he is automatically warned that an exceptional situation seems to occur. Through his MS device he will be able to request the authenticity of the ATM terminal using the MS location details and will receive information that no authenticated ATM is available at that location.

This will give the user ample time to close the card's payment enable mode and alarm the competent authorities. A more attentive cardholder though might have requested an a priori authentication confirmation, and he would have been warned and would not have to face the hassle of stolen card details.

A further enhancement is the possibility to perform reverse authentication verification. The ATM or stationary POS that have incorporated the secure card system may be informed through an exchange of a simple code received from the central system that the card presented belongs to the community that uses enhanced security and that the transaction location i.e. the merchant or ATM is known. In case such situation arises the ATM or POS may request a return reply from the associated MS without the need of an intervention by the user and comes in lieu of requesting the entry of the PIN code in the terminal. This reverse authentication method builds on the reasoning that the MS device is in the immediate vicinity of the ATM or stationary POS and thus creates a direct device-to-device verification means increasing not only the security (as no PIN will be entered anymore in the terminal) but also the user friendliness of the payment system (as no user interaction is required anymore). However, in theory such a system may increase the risks associated with theft or mugging, as a thief who stole a person's card and mobile phone would be able to withdraw cash without needing to know the card's PIN in the case where the card is enabled or he is familiar with the procedure (such as requesting the opening of the transaction window, the initiation code to identify that particular card amongst others) and that he tries to abuse the payment system immediately after the theft (else the card and/or the MS would already been de-activated). In case of mugging the practical chances to defraud the system are close to nil as the victim would usually immediately alarm the competent authorities and the responsible card system operators..

In addition more beneficial use of such secured terminals can be found by improved security at the level of portable POS terminals that needs to communicate via a protected (or not) radio network with its local base station. This station is connected to the central system usually through a wireline PSTN or IP solution. The chances of intercepting crucial card data whenever the wireless network is not sufficiently protected are rather high as many portable systems do not even use encrypted communication lines to their base station or use out-dated and easily breakable technology such as WEP.

In such a delicate situation, from a security perspective, it may be considered that all relevant data will be passed on to the central system using the MS device without the need to use the credit card as an authentication means but will solely be used as an identification means. Or, in other words, the reverse authentication verification is extended to provide PIN equivalent data as well as card equivalent data not originating from the card but directly from the MS device.

The process will be that the secure card system detects that a card transaction is requested by a card that uses the enhanced security through a portable POS terminal. Such detection is possible due to the fingerprinting mechanism that shows such details when access is possible to the raw pre-processed data and on the basis of the register of authenticated POS terminals holding such details. Until that moment only the card details needed for identification purposes are handed over to the POS and nothing more than that.

The central system requests the opening of a data exchange session with the MS and assuming the availability of the GSM or better the UMTS network, information is exchanged between the MS and the central system using encryption and tunnelling technologies. The technique of challenge/response will be applied using location information. The central system informs the MS that a payment request is pending and asks which amount should be paid to the merchant (or hotel etc). Furthermore the central system requests the corresponding PIN code plus the associated initiation key (confirming the charge against that particular card). Hereafter it confirms that the payment is processed and if all is in order it acknowledges the transaction, closes the session and sends a payment confirmation to the POS terminal as payment proof. A payment slip will be printed for administrative purposes.

In such situation security concerns have been dealt with, the merchant receives confirmation and independently the cardholder has been informed. Eavesdropping, man in the middle attacks, use of cloned or stolen cards or any other known attack against the system would have been unsuccessful.

### Protection Offered

As was mentioned before and with reference to figure 1 the security system 7 uses different methods to protect the current payment schemes against fraud and abuse on a system level. At the one hand the security system can be considered as a super access control or gatekeeper, only allowing authorised users into the payment zone (i.e. the current card system 8). In addition the system can be viewed as an always-on, highly reliable watchdog and guardian angel.

The explicit continuous requirement that the security system needs assurance that the payment enabled card is within the perimeter or security fence means that the MS 1 becomes a supervising safety mechanism. In fact, this security feature has three different functions:
1. It can monitor continuously the position where the MS 1 is currently located (however this is normally only required when a card is switched to payment enabled mode).
2. In enabled mode it can measure and monitor continuously whether the payment terminal 11 location (i.e. the POS) or the place where the card is requesting a transaction approval is within the direct vicinity of the MS or within a close and well defined perimeter (e.g. tax free shop within an airport environment should be close to the last known location). This can apply to the situation before and after any procedural event that triggers a transaction so that before the event and after the event transaction plausibility checks are made possible.
3. It can execute further plausibility checks in enabled mode i.e. by verifying the present location against blacklisted regions or refusing the opening of the transaction window if an impossible constellation becomes apparent, like requests from two different totally separated locations at more or less the same time.

The security system disable/enable function is also a new ability, which currently does not exist and is not provided for by the present card systems. The only, albeit extreme, variation of such mechanism is to request a de-activation of the card 2 forever and apply for a new card (plus number) from the issuing bank. The associated administrative process is often extremely cumbersome and costly and might be an indication that switching cards on and off are not an option within the current system. In this context it should be noted that refusing a transaction request as card systems sometimes do as a result of an issue with the (temporary) credit standing of the cardholder is not identical to disabling the use of a credit card. The only option a card issuer has in the present system is to block the card. This will result in a situation that the cardholder will need a new card as unblocking is not possible. This is very similar to card de-activation.

However, with the security system features of the present invention, a method of disabling and enabling authentication procedures is made possible, as it is a series of procedures which require fulfilment before the usual payment checks and routines take place. Thus even though current systems do not support the disable/enable option, the security system makes such switching possible by preventing the usual authorisation process when the card is in disabled mode. This results in the security system holding a typical gatekeeper's role. All cards are by definition shut off or disabled unless a prior green light from the security system has been received. This gives the current system an additional series of authentication and validation checks to ascertain that all the pre-conditions are fulfilled such as the authenticity of the requesting person and the place of requested transaction. The card payment system will then regard the payment request as green flagged or safe lifting the default restriction from initiation refusal to initiation acceptance for any such transaction request coming from the security system (taking into account other conditions which need to be met).

Fraud protection is also provided for at the MS level. It should be recalled that the green light to access the payment scheme will only be given whenever the proper DNA is issued by the MS to the security system, a challenge is properly answered and that the MS is located in a pre-defined perimeter based on geo-location information amongst other conditions.

The DNA of each MS should be unique and different for any device and, in fact, for combinations of different devices and radio network access keys (e.g. in a GSM/UMTS network 10 when a different SIM Card is used). The DNA is a result of inter alia the combination of device and SIM characteristics and so should correspond with the DNA known to the security system. Also the inverse applies, i.e. using the known SIM in combination with another known or with an unknown device creates different and hence invalid DNA or possibly no DNA will be available at all in such a situation.

In the theoretical extremely unlikely situation whereby the card, its associated PIN plus the cellular phone and initiation key would be stolen from the legitimate owner (e.g. in a situation of physical threats or extortion), it would still be difficult to defraud the security system enhanced card system. Assuming that the criminal was aware of the characteristics and the way the system should be used, it would be extremely risky for him to try to abuse the system.

Immediately using a (skimmed) copy of the card in a far away country or away from the place of theft is useless as the card would not work as it will be located outside the authorised perimeter as defined by the MS and the security system. Moreover, if the criminal waits too long before he tries to abuse the card system the transaction window will be closed (if open at the moment of theft), the card will be disabled, the associated bank(s) warned and accounts blocked and ultimately the SIM in the cell phone and the MS itself may both be de-activated. This situation may in theory occur when the MS would be shipped or transported to a remote location to attempt a fraudulent act far away from the place of theft.

Thus, in order to be successful, an attempt to defraud the system must be made quickly and so in the vicinity of the place of theft.

This is contrary to the way criminal gangs usually operate as they are aware of the high risks when using a card immediately after a theft and prefer the so-called cross border fraud whereby a card issued in one country is fraudulently used in another country. In any event when the criminal is not careful, the open transaction session can immediately locate him and would make his whereabouts - when passed on by the security system - known to the judiciary authorities.

Where a card is lost, even in combination with the associated PIN, no danger exists of defrauding the security system and thus the card system. As the physical link between the MS device and the card (with or without PIN) has been broken, even if the card were enabled, it would not be able to be used in transactions as the location of the transaction would not match that of the MS. Similarly this situation will apply whenever the card number and PIN are stolen without physical theft of the card itself e.g. in the case of skimming. Also in this case the bank customer as well as the bank remains untouched by such an incident.

Where the MS with DNA is lost or stolen, without the associated credit card, nothing can happen as firstly the person in possession of the MS may not know of or may not be familiar with the special features of the MS, and secondly - in current card payment systems - payment transaction requests are made by the card (plus PIN) and not by the MS. Also in this situation no financial harm can be done to the card payment scheme or the personal assets of the customer, apart from the loss of the phone and possible associated call charges etc.

### Use in other Transaction Systems

The security system can be used to add a high level of security through multi-factor authentication to mobile payments, internet payments, or payments in general where wireless technology is used (i.e. payments where in the communication network somewhere in the chain wireless technology is used) or in cases when the purchaser is not physically present at the place of purchase as is in the case with distance and mail-order selling, as well as internet sales (also known as non-face-to-face, MOTO - Mail Order Telephone Order or CNP - Card not Present transactions).

Other financial transactions systems such as mobile asset management (e.g. of a stocks and bonds portfolio) or supervisory surveillance systems or even for managing more domestic related matters will also benefit and the security system may be modified to enable direct device-to-device transactions.

In fact, in addition to the above the security system may be used to facilitate and speed up the execution of "normal" bank transfers thanks to the built in security measures which mean that some of the traditional checks and verifications become obsolete. Moreover the security system can be used as an electronic purse system, keeping relatively small amounts of "electronic" money in the MS that is used to pay for small ticket expenses such as newspapers, parking fees, public transport or the daily espresso.

Alternatively the user may receive small amounts of money from friends or family or also as change from merchants that do not keep cash in the form of coins. In such situations, the security system can be compared with an enhanced chip-card system managing certain amounts of electronic money.

Summarising, the security system's core technology can be used for any transaction, financial or nor, for which a card based payment scheme is currently used such as, but not limited to:
·Face-to-face purchases of goods or services in a merchant/store environment
·Unattended direct transactions using ATM terminals operated by a banks' network
·Transactions using a 3rd party in-between the operators and the cardholder:
   a) Telephone payment systems (to merchants but in a non-physical environment)
   b) Electronic payment schemes (using hard- or software provided by banks)
   c) Internet payment schemes (using payment gateway services)
   d) Other internet based financial transaction system (e.g. stockbrokerage)
·Direct MS-to-MS payment schemes
.Electronic purse systems
·Special purpose card systems (petrol cards)
·Company card systems
·Medical & healthcare card systems
·Loyalty card systems

The security system is presented here as a payment transaction authentication and surveillance system. However, any system requiring high grade security features such as access and identity control systems, secure registration system and any security mechanism that relies an a card (or rather token) based system can rely on the core technology to improve their already existing security.

In particular, the security system may be adapted for use in securing mobile bank transfers when the user has no ability to make a "regular" bank transfer e.g. when being abroad. These procedures take into account to the extent possible the requirements applicable to the Single EURO Payment Area (SEPA) in the European Union.

It should be noted that in spite of the introduction of SEPA it will be virtually impossible to make a regular bank transfer from a domestic bank account to another within a reasonable period of time without having recourse to a telephone or fax instruction in case one is outside his home country. However the majority of banks usually refuse such instructions unless the bank customer has signed an agreement to absolve the bank of liability for any abuse of such instruction methods, thereby fully transferring the risk to the customers. The security system can be adapted in order to provide a higher level of security for such a transaction, allowing a higher level of trust in such transactions and therefore avoiding the need for signed agreements as above. One embodiment of such a security system may operate in the following way:
1) The user sends to the security system a request through the MS via a wireless network indicating that he intends to make a payment or transfer for which he will use one of his (bank) cards as the authentication token for this transaction. For security reasons a card may be chosen which does not refer to the user's bank account, which is not stored locally in the MS. In other words, when seeking to transfer money from account A to account B, the user may use a card associated with account C in order to authenticate the transaction. The user keys in a code into the MS which is associated with the card the user wishes to use and starts a program within the MS that enables the user to create a single request or alternatively a batch of payment requests, which are stored in an encrypted format inside the MS.
   This initiation will be made based upon the usual handshakes and other security system security checks. The payment requests are deliberately kept incomplete to ensure that in this stage these requests are not complete and may not be validly relayed to the central security system. For example, one aspect of the request that may be withheld is the amount of the individual payment request(s).
2) This batch of payment requests or the single request will be released after the payment intention session has been completed and the batch will subsequently be sent upon the closure of the transaction window in an encrypted format.
3) After having received the payment intention batch with the incomplete payment details the security system notifies the user through the MS that he is required to complete his payment intentions within a certain period (default is the end of the day) otherwise the batch will be considered as not valid and will be destroyed automatically.
4) Moreover the system makes available certain reconciliation keys to the user, referring to the relayed batch and to each individual payment therein. These keys will have to be used to combine and complete the set of transaction information required to make the transfer from the sending account to the receiving account.
5) The user will have to complete the transactions which awaiting validation in the form of the reconciliation key and the corresponding transaction amount at the clearing agent responsible for managing the card which has been used as the token mentioned above.
6) This completion will be done using a different communication network than that used for the first set of payment details and the preferred network is the ATM terminal available at any city in the world (note that the user is likely to be abroad and does not have access to his bank in his home country).
7) By inserting the card in the ATM and after the usual checks the user will provide the reconciliation keys plus associated amounts to the "local" clearing agent, who will relay this apparently meaningless information having no value whatsoever to any 3rd party to the domestic clearing house.
8) Now the clearing house will follow similar procedures as with cash withdrawals. In case the clearing house will also be used as a settlement agent (a matter outside the scope of the security system) then the payment instructions may be considered as cash withdrawals from an ATM terminal whereby the cash taken will have to be paid by the cash receiving user while the cash pay out will have to be paid back to the bank operating the ATM that "dispensed" the cash - that is, the receiving bank.

In between the steps 3) and 4), as mentioned above, a further security measure can be incorporated in the security system. Instead of fully relying on the data required by the system by reading the card, the card payment system requests such data or asks for confirmation of said data from the MS which at that specific moment is or rather must be located in the vicinity of the ATM (whose fixed location is known to the card system whenever the territory in which the user is supports the security systems and at least some of its features).

In general, the security system may make use of a transaction window, or the enable/disable the card feature. This feature and its associated procedures puts at least one full set of relevant authorisation transactions before and in front of the traditional transactions herein further referred to as Payment Authorisation Transaction (PAT) related procedures.

The transaction window feature, comprising the Transaction Window Transactions (TWT) opening and closing procedures, may in fact be a complete range of procedures where location related and plausibility related monitoring and test as well as verification processes (in fact transactions) takes place. Furthermore, within the encapsulated TWT session, the so-called Within Window Transactions (WWT) are a separate layer of transactions which are directly associated with the cardholder's initiating a request, introducing the payment request into the security system, by presenting the token - in some cases a card - to a card payment accepting merchant for settlement.

The TWT session remains open for a limited time to allow a series of accepted PATs (decided upon by the card payment system). Moreover the TWT comprises a series of processes which includes the exchange of secure tokens and is referred to as the Request Payment Transactions or RPT phase and is initiated by the cardholder. The possibility to assess the various PATs within one single session also means that the different payment transactions can be monitored as part of the WWT layer. This monitoring can be performed not only before a PAT is granted but also after a PAT has been given and this for as long the window remains open. The before and after the transaction events may contribute to increasing the security during a TWT session as well as for subsequent TWT sessions as the last known location and its time will be stored by the security system to further improve the plausibility checks.

It is important to understand that the transactions belonging to the RPT phase are different from the transactions during the above described PAT while the transaction window TWT is "only" a pre-stage to the known payment authorisation process within a card processing system controlling the PAT process. The RPT procedure is the basis for the "clearance" information to the card payment system operators that the requested payment requested by the cardholder is genuine, is compliant with the additional location related security provided by the security system described and other conditions defined by the security system (or not).

During the RPT phase the orange flagged cardholder's request needs to pass various tests and need to comply with a set of predetermined conditions before the RPT is capable of deciding to flag the transaction request as "safe" and changes it state from orange to green. Whenever the transaction request is deemed to be in line with and in compliance with the predetermined conditions the green flagged request will subsequently be passed on to a Hand-Over Transaction (HOT) process, the interface communicating with the card payment operators. Whenever the security system is not capable to establish whether the request (regarded as a RPT transaction) is genuine or if it detects that the request does not comply or does not pass the tests, the request will change its status from orange to become red flagged and kept within the security system as if no request has been made. The consequence is that the request to authorise a payment will not be honoured unless the card payment operators who may prompt the security system to send information regarding a specific payment request decide to overrule and ignore the red flagged RPT transaction.

Under normal circumstances a green flagged RPT transaction will be transmitted to the card payment system and the operators thereof now perform their own tests (on the basis of the green flagged RPT given by the security system and i.a. the creditworthiness of the card holder, his personal accorded terms etc.) and they will decide solely and independently if the payment request will be honoured and the card debited for the amount requested by the cardholder.

It is clear that the card payment operators - most likely including the card issuing instance - will continue to have their own responsibilities in respect of deciding to accept the payment request and the resulting charging of the card on the basis of their own criteria and rules. They continue to be accountable for their decision vis-à-vis their customer i.e. the cardholder and use the services provided by the security system as an important criterion on which their payment authorisation is based. This demonstrates that the PAT cannot be granted by the security system but by the card payment system only. The security system disclosed herein covers the transactions from the TWT comprising the WWT, the RPT and the HOT while excluding the PAT related card payment phase.

It should be noted though that it still may be envisaged to combining the security system and a card payment system within an integrated scenario. Such integrated system will comprise the TWT procedures described before whereby the PAT will form a logical extension of the transaction chain previously identified. The HOT procedure though will now play a lesser importance within the whole chain of transaction procedures as the explicit hand-over from one distinct system to another does not take place anymore.

Moreover in other transaction based systems the security pre-stage will also provide the increased security features whereby the description and the acronyms used will need to be slightly adapted to reflect the context. The principle though is not affected and the transaction chain TWT, WWT, a requesting transaction such as a RAT (Request Access Transaction) in lieu of the RPT and HOT are foreseen and the described sequence of transaction events controlled by the security system remain intact.

In summary, it will be realised by the skilled man, particularly with reference to the below section, that the term "transaction" is not used herein to refer only to financial transactions. Rather, the location based security described may be used to increase the security of a great many "transactions", which may include events such as requesting access to a secure area. Furthermore, the skilled man will realise that a transaction request that is refused will not lead to the requested transaction, but the exchange with the security system may be considered a transaction in and of itself.

### Use in Other Areas

The security system solutions described herein is based on a generic concept that is designed to offer security features and mechanisms to so-called transaction processing systems. However other areas of industry will also benefit from this concept.

Notably the transaction processing methodology and the identity establishment processes used to produce unique identities by the procedure referred to previously as DNA sequencing of (electronic) devices such as a computer or computer-like hardware can be applied to other applications.

As is disclosed transaction processing in the financial services industry will greatly benefit from the methodology and technology previously explained in detail (and referred to as IDNAID). Similar benefits can be achieved in other areas of transaction processing outside the scope of card payment schemes or financial services in general. Transaction processing's main security issues are the consistent keeping and surveillance of the unbroken chain of the current, preceding and subsequent steps in a process or procedural chain.

Particularly in highly complex environments or systems, requiring an ultra high processing speed such as is the case in massive database applications, this issue may be potentially compromised. The IDNIAD technology uses highly accurate timing signals at the nanosecond level from the GNSS satellite systems to produce unique identifiers, an approach which enables clear identification and monitoring of flows of events required in a transaction processing environment.

Moreover, not only will this methodology be of importance to authenticate chains of events or chains of processes, IDNAID will also provide the necessary level of identity protection needed in a quickly changing digital world. Identities that used to be a lifelong or even eternal significance are being compromised and abused to the detriment of often innocent victims who suddenly discover that they have become victim of an identity theft.

Unique referencing of moving or static objects is important whenever ownership needs to be proven or when legally it needs to be established if and under which conditions certain transactions may take place. Documents carry more and more digital references such as information contained on a microchip or comprise a digital representation of the owner in the form of a digitised human fingerprint.

Generally speaking, the technology and methodology described herein may be adapted to almost any situation where authentication of identity is required, either as a supplementary authentication factor leading to highly secure card transactions, or even as a primary authentication factor in the more general situations described above. Taking a normal mobile device, it can be adapted through software to become an authentication key, being used in conjunction with a remote server (which may be more or less remote depending on the application) to prove, or go some way to proving, the identity of a person. The various embodiments such as DRM described above may in a way be likened to transactions, with the request e.g. to access the DRM protected media being viewed as a transaction in the system, and following similar steps as laid out above. In these cases the "terminals" are likely to be the equipment being authenticated or at the place where authentication is to take place, e.g. an optical disk player or an access panel for a secure area. The area protected by these terminals may be virtual (the DRM media) or physical (a secure area).

The term "IDNAID" is used to describe in a general way the authentication technology of the invention, in particular with relation to the DNA sequencing

In particular, the unique transaction processing and identifying DNA methodologies can be beneficially used in the areas of:
1) Digital Rights Management
   i Information Rights Management
   ii Escrow Management & Execution
   iii Telecom spectrum management and usage
   iv Protection against unauthorised access to computer networks and databases
2) Identity Protection/Theft and Privacy
3) Networked equipment incl. Routers, Switches and Terminals
4) Business Continuity and Disaster Recovery

The list above is not exclusive and other areas may benefit from the DNA sequencing, the core of the security system. In fact any application requiring high-grade identity assurance and authentication could be improved by the invention. The above listed applications are described in more detail below.

### 1. Digital Rights Management

In the domain of digital right management it is of the upmost importance that the use of content such as audio, video, text, pictures and published matter released and available in different formats ranging from printed books to digital streams is properly managed and that the proper parties to whom goods or services were rendered pay the appropriate and agreed sums in time. This is of particular importance when content is protected from use by non-authorised users. Therefore DRM systems and methodologies are by definition providing a solution for a security issue. Whilst such solutions have been introduced in the recent past it also became clear that exactly the progression of high performance processing equipment has resulted in the de facto abandonment of DRM systems due to the impossibility to warrant the proper protection of the content DRM systems were supposed to protect.

Developers of DRM systems seems to focus their efforts on trying to enforce the access control rather than trying to protecting the transaction between the end user wanting to obtain the content and the content providers willing to release such content against the payment of a (license) fee. The digitalisation of the current available content and the simple means to copy and distribute such content has as a consequence that past methods and systems are no longer suitable for application in devices supporting modern technologies. Even newly designed standards specifically made for addressing the specific problems such as the protection against illegal copying of music or film has not been successful. Often, devices and the DRM protection were hacked before the official launch of the products as was the case with the latest DVD-DRM standard Blu-Ray.

A solution to this problem can be brought about when a device such as a consumer appliance like a Blu-Ray player or a set-top box required to listen to or to view broadcasted audio or video content can connect to an MS which uses the IDNAID technology. Connection can be made by wire e.g. direct using a (mini) USB link, or wireless through e.g. WiFi or similar RF technology such as Zigbee and even Bluetooth or by Infrared. As was shown earlier in the transaction processing example it is possible to exchange sensitive financial and personal data from and to a central system that processes the information further.

In these DRM applications the MS is the carrier of certain personalised key codes it may receive (or pick up) from a services provider in regular intervals and that it needs to further relay to the device holding a unique code or DNA to allow the trusted appliance to continue to work properly.

One of the great weaknesses of current DRM systems is that such trusted appliances are equipped with certain codes, most of the time "programmed" or "hardcoded" by the manufacturer or the provider of services before handing the device over to the end-user i.e. the consumer of protected content. These codes can usually not be changed afterwards unless use is made of cumbersome upgrade procedures that even may endanger the proper functioning of such device or may even void the warranty of the device in case the owner does not properly executes the procedure.

Alternatively as is implemented by set-top box manufacturers an interface is offered that may be used for inserting a coded card or other means having a memory capability normally equipped with a (programmable) chip that contains certain tokens enabling the viewer of paid content to exchange such tokens with the device thereby unlocking soft- or hardware mechanisms that decrypt incoming encrypted signals or unblocking certain communications channels to and from the display or otherwise so that sound and image is put at the disposal of the listener or viewer. Often a technical obstacle is introduced by "reformatting" the original digital content to an analogue version so as to inhibit the loss-free copying of the content in an endless way.

Another weakness that has contributed towards the reduced use of DRM systems are the difficulties that present systems have to adapt themselves by offering mitigation scenarios whenever systems are compromised and codes or processes need to be adapted to counter the attacks on the DRM in place.

Presently DRM protection has lost much of its appeal due to constant issues associated with the security mechanisms embedded in the DRM methodologies. However by adding location aware security features DRM may become appealing again while content creators and content distributors will have a new weapon against unlawful copying and distribution of their products and services. With IDNAID, the owner of an consumer appliance is in fact the owner of a unique mobile device (the MS) that securely receives or collects these codes from the manufacturer who uses terrestrial or non terrestrial radio transmissions for relaying initiation of update codes to the appliance via the MS . Now this device has the new codes it is capable to continue to read (and to write to) the data streams.

Similarly when the appliance is regarded as a boundary terminal as has been mentioned before when citing the secure payment system the benefits of having a location determination possibility for the appliance will be undeniable. Such a scenario can be put in place when the MS equipped with location determination means transmits in addition to the codes to unblock the appliance also location information to the appliance in order to fix the position of such device as it were a boundary terminal.

A further improvement can be achieved when the appliance itself will be equipped with location determining means such as a GPS chip. These chips have become so cheap that adding their costs to the cost of manufacturing the appliance will be weighing advantageously against the cost of losses in connection with piracy.

The overall security will even be better when the appliance will undergo a so-called DNA sequencing procedure to uniquely identify such appliance by attributing a tamper free code using hardware details and GNSS information closely resembling the method for coding a POS/ATM terminal previously mentioned in one of the embodiments.

It needs to underlined that using similar procedures as used in the cited secure payment system may not be totally feasible due to the fact that on the basis of current technical restrictions location determination inside buildings is not completely reliable as the weak GNSS signals do not penetrate well thick concrete walls as an example. Ensuring a clear line of sight with the GNSS satellites is obviously not possible within a building, house or apartment block.

Although appliances such as players, recorders, gaming stations, set-top boxes and similar devices such a computer running appropriate software to listen, view or read do have an option to connect to a network comprising Local Area Networks (LAN), many stand alone devices still exist that need to access protected media and content. Such situation will not enable the appliance to act as a terminal because of the lack of connectivity to a network.

Moreover even if such connectivity possibility exist the chances of code and data interception is much greater compared to the secure payment system as it is much easier to intercept codes and data in such unsecured environment. The network is often not protected or can be easily manipulated to make Man-in-the-Middle, spoofing or replay attacks possible.

Therefore a slight adaptation to the previously mentioned methods and procedures may be required to ensure a similar level of security to these kinds of transactions in the domain of Digital Rights Management.

Basically the procedures to provide for a unique identifier, the identification processes to validate the MS used, the location determination and other previously mentioned processes will remain the same.

The following means and processes will require certain adaptations though,
a) The communication means with the appliance
b) The identification method of the appliance
c) The exchange of codes and the handshake method
d) The validation and pairing of the MS with the appliance method
e) The localisation determination method

These adaptations do not require any principle amendment to the transaction authentication methodology described before but may need a small modification due to differences in the (sequence of the) relevant processes.

As an example et he communication channels used in the secure payment system exchanging information between the MS and the terminal were based on wired terrestrial communication links on the one hand supplemented with (non) terrestrial means on the other. While in theory this will still be possible e.g. when the appliance would be connected to the internet through a DSL connection the point of departure should exclude such connectivity.

Direct communication using direct links such as USB communication ports are more likely as well as WIFi, Zigbee or other wireless short distance communication means that may be envisaged using as an example a wireless home router. In any case communications through a third external node or third party is also excluded as a part of the basic configuration.

The identity verification of between the MS and the trusted appliance and vice versa is less critical than the process between the content providers' central systems and the MS. Still it should be avoided that the authorisation key exchanged between the MS and the appliance could be used more than the authorised number of times as defined by the license obtained by the end user.

This underlines the need for proper exchange of codes and the use of a secure handshake. Moreover the validation and pairing of the two devices i.e. the MS and the appliance is important.

The secure payment system relies on the possibility to determine a location associated with the transaction and that is independently authenticated by different means. In fact three positions or locations are taken from two devices i.e. the MS and the terminal as well of the transaction event. These three positions are compared and related to each other whereby the two of these three positions is already enough to establish a high level of security and thus authenticity assurance.

In a DRM scenario a similar situation exist whereby the MS position is clear as this continues to be established identical with the secure payment system. The position determination of the appliance is different though.

In case the appliance is stand-alone and not connected to a network the only possible way to get location information is through the MS using a wired solution. In such case the MS extracts appliance identifying information (maybe comprising a CPU identifier or other serial number) and associates this with the MS identifier and thus the MS position at that specific moment in time enabling a location fix at that specific moment.

The MS comprising two way communication means transmit this time stamped information to the manufacturer or the provider of services on the basis of instructions derived from an application stored in the MS. This location data together with the MS identifier will thus be stored as the first location relevant data set belonging to that specific appliance.

A second data set is obtained from the user who needs to register the appliance in order to be eligible for updates, warranty and premium services such as paid content.

The manufacturer is now capable to associate the first location with the second as it will be able to reference and associate the two different data sets. In addition by knowing the first data set he is capable to establish a second i.e. the place where the premium services are "consumed".

Contrary to the secure payment system no constant monitoring and surveillance services will be needed (and may not be acceptable for the consumer), however the manufacturer may require to have access to the three different locations when providing patches or updates to the firmware. Hereby it is ensured that either the appliance that is located at a known position will be associated with a MS who holds certain tokens that enables the consumer to continue to enjoy the paid content he paid for while at the same moment it is ensured that specific content like pay-per-view of sporting events for which token information is required by the appliance is associated with a position and thus geographical region or area for which such content is released in view of the (distribution rights) that have been obtained by the service provider.

This method warrants to protect digital content distributed using global networks by creating a secure virtual geo-fenced environment whereby it is warranted that legitimate content is made available to an authorised user being and consuming such content in a licensed geographical area.

Blocking the possibilities for non-legitimate consumers of such content to break into decryption means is hereby made impossible as the appliances will receive more updates in closer intervals at an efficient and low cost manner, while at the same time codes and tokens change constantly making break-in attempts extremely difficult and costly and furthermore ensuring that a) content, b) appliance and c) legitimate user are all linked to and associated with a specific position at a specific moment in time.

Other business areas encounter similar security flaws and issues which can be solved by applying the technology described before. While area specific adaptation may be useful or in certain instances also be required the authentication features previously described and applied in a specific domain will improve the processing of the underlying transaction in a way comparable to the methodology for Digital Rights Management.

These business areas comprise:
I. Information Rights Management (IRM)
II. Escrow Management and Execution
III. Telecom spectrum Management and Usage
IV. Protection against unauthorised access to computer networks and databases

### I. Information Rights Management

Information Rights Management (IRM) is sometimes understood to be equivalent to DRM. This is not the case as IRM is more focussed on the protection of enterprise and corporate documentary assets, than on protecting digital products although the latter is surely an important element of IRM policy. IRM is presently strongly linked to text related documentation but will more and more evolve towards information flows, its sources and its destinations.

Furthermore IRM has everything to do with procedures on how to store information, whereto and how it is in transit from one place to another and how and by whom the information is used, all this in often sensitive areas such as corporate R&D departments or in the healthcare industry.

This complex environment where business know-how and knowledge, trade secrets, in-house R&D, patents and other intellectual property is at stake must be well protected and failure to do so may adversely affect the business.

A further simple and straightforward example can be found in the domain of global B2B/B2C invoicing, quotation, tender and any other exchange of documentary transaction possible binding different parties to a series of rights and obligations. To give an example of the potential of proper IRM systems is found in electronic invoicing and electronic billing. At this moment still 97% is performed on paper and industry is expecting that improved IRM systems based on a solid technology will reduce paper systems with electronic systems.

The IDNAID technology is not offering an end-to-end solution to IRM related issues, however it offers an innovative means to uniquely Identify, the different stages, the different actors, the data storage and processing facilities, the communication network and last but not least the whole corporate information flow with a means to securely authenticate the processes, and the information in a proper and trustworthy manner. In particular, the location data available via e.g. GNSS may be of importance.

Also in this area IDNAID especially in combination with the Digital Rights Management system may support other IRM specific technologies to improve and secure corporate information flow processes going out or coming in from customers.

### II. Escrow Management & Execution

Escrow management is a range of professional services offered by specialised agents (including banks) to third parties to facilitate business dealings between these third parties who typically have not done business before, are geographically apart, whose transaction value is high and where normally no high levels of trust have (yet) been established.

The escrow agent who acts as a kind middle-man ensures that both parties keep their contractual obligations vis-à-vis the other and, after having been satisfied that no issues remain outstanding, initiates the settlement of the payment against the release of (usually) the goods.

Escrow services are especially welcomed by parties who want to formalise a transactions involving the internet, but are wary of making the first step (i.e. sending the goods without having received payment, or making an advance payment without having access to the goods). A typical situation is described below.

When two parties wish to enter into an transaction do not have previous business dealings and are therefore not willing to the first step i.e. making an advance payment (the prospective buyer) or sending the goods ahead of the receipt of the agreed transaction price (the prospective seller).

How can such a transaction still take place without that the two parties physically need to meet to hand over the money and take possession of the purchased goods? This assumes that both parties are registered at a central system that holds certain credentials on these two prospective business partners. Every time or in any case in regular intervals transaction relevant information is relayed to and from the central system a position determining process is launched to i.a. warrant that the request do not come from or are sent to a location that is considered unsafe or not within a set of predetermined conditions e.g. cellular phone and the stationary device used are not sufficiently within each others reach to warrant that the person who uses both devices are the same. The chain of events will be according these steps.
1) Buyer A request that his cellular phone will be enabled for transaction by sending a code to the central system
2) The central system authenticates and identifies the cellular phone on the basis of the exchange of unique codes
3) Buyer A receives the green light and his cell phone is payment enabled
4) Buyer A connects to the internet through a desktop stationary device by using a secure connection such as TLS and visits an agreed website belonging to the central system
5) Buyer A authenticates himself using secure access information comprising an OTP he receives from the central system via his cellular phone
6) Buyer A communicates transaction relevant information to the website such as description of goods, the Seller's B references as well as the agreed conditions using a mask to facilitate the process and to standardise the information
7) Payment relevant information is send to A's bank, or when a credit card is used the card payment processor
8) In case the bank or payment processor issues a transaction approval signal such signal will be relayed via the cellular phone that the transaction will be honoured when formally requested within the current payment session.
9) At the same time the Seller B has gone though a similar procedure as mentioned under 1) to 5) above
10) Seller B in addition receives a transaction request code from the central system via the cellular phones which associates him with the transaction request of Buyer A and provides this to the website, confirming this via its cellular phone
11) Seller B receives the transaction details on the screen of his stationary device and confirms the transaction details given by Buyer A
12) Seller B identifies the account to be credited (or the merchant credit card he wishes to credit) and receives a confirmation request stating the transaction number, the amount and his account to use
13) After such confirmation and still within the transaction session the funds will be transferred and kept in a 3^{rd} party escrow account
14) Buyer A has effectively made the agreed sum available and Seller B has the irrevocable promise that he will be paid when the goods are in the condition as agreed
15) Seller B despatches the goods and gives Buyer A some time to inspect and to formally accept
16) If Buyer A agrees to accept the goods he simply notifies the central system via his cellular phone using a transaction acceptance session that the funds known under a pre-validated transaction number may be released to Seller B
17) Seller B upon notification accepts the funds and will be credited the agreed sum and the escrow responsibilities can be closed

IDNAID enables the speeding up of the escrow procedure whilst still warranting that security remains at the forefront notably regarding establishing the identity of the counterparty and the undisrupted trace of the money flow.

### III. Telecom spectrum management and usage

The amount of data streamed across the world is currently doubling in volume every 12 to 14 months mainly caused by Internet traffic that is increasingly carrying multimedia data such as audio and video streams.

With this in mind the efficient use of telecom bandwidth will significantly improve the telecom operator's profitability. The associated marginal capital expenditure cost for the operator will be practically zero while at the same time the use of bandwidth will be optimised resulting in a situation whereby more data can be handled within the same infrastructure (this is of course within certain boundaries) and as a consequence dramatically increasing the per time unit revenues.

Moreover as currently data communication systems rely more and more on the secure relay of the sometimes highly sensitive data over public or closed networks secure relay and the absolute certification of the origin of the data has become a top priority for most Internet Service Providers (ISPs).

Therefore ISPs need improved efficiency in their data network at the one hand and improved security at the other, two requirements that usually are not really compatible. IDNAID offers the possibility to satisfy both requirements at the same time without unduly delaying the forwarding of data leading to possible congestion. Furthermore the invention ensures network neutrality, a principle that is regarded as one of the highest priorities in the internet community.

Typically these issues can be found in the area of networked gaming, where online communities are generating a huge level of data traffic and bringing together large groups of online gamers. This has always been one of the cornerstones of the internet and now gaming has become a commercial service offered by a whole range of gaming providers whereby real world problems are becoming visible in the virtual world of gaming.

In this domain many aspects concerning DRM, privacy but also transaction processing in the form of billing can be found. Identity issues combined with the sometimes important sums of money at stake (i.e. online poker tournaments) results in a situation whereby the secure settlement of the financial matters have become a high priority for the organisers of these gaming events. IDNAID is a suitable solution for service providers requiring a secure and effective mechanism especially in view of Card-Not-Present Transactions in combination with Identity and Privacy Protection.

### IV Protection against unauthorised access to computer networks and databases

As of today Card-Not-Present transactions (using credit card payment that are not physically present) are a major source of headache to the security people responsible for safe guarding the card payment system. Criminals are more and more focusing their attention to the repositories and databases where credit card information is kept to steal such information in bulk as opposed to a one-by-one approach.

However computer networks and databases are not only of interest to the criminal organisations dealing in credit card information. In general terms computer networks and databases contain massive amounts of sensitive and (top) secret information that may not be divulged to non-authorised persons.

A recent case of remarkable database hack concerns the theft of highly confidential construction and design as well as electronic systems plans of the Joint Strike Fighter (JSF) project the costliest weapons programme ever (US$ 300Bn). According to published information terabytes of secret data were stolen from the Pentagon's computer system. In fact not only systems are under attack that contains confidential military information also networks of the public electricity grid were attacked in April 2009 according to the public sources.

These intrusions were usually not detected by the direct responsible organisations in charge of operating the network but by intelligence agencies that investigate the vulnerability of existing computerised networks. A cyber attack may target a nuclear plant of the transmission grid of a country or group of countries. Therefore one may wonder how static passwords will in the long term give additional protection, leaving apart the serious security issues which become already apparent when registering the card to these systems.

### 2. Identity Protection/Theft and Privacy

The fastest growing area of criminal activity in the USA is identity theft possible caused by the way social security numbers are managed and stored. It may also be argued that the legislation on privacy, which is considered less strict in the USA compared to the EU, is also a reason behind this, as private companies can undertake huge data-mining exercises combining different databases without being hindered by legislation.

The result is that sensitive private information including social security numbers (SSN) become quasi public and are available in criminal circles and are even put on sale. This, in conjunction with other private information that can be obtained through as an example social engineering, is often sufficient to create new identities or steal existing ones and allow the opening of bank accounts and may in itself be the basis for obtaining official documents such as driver's licenses from state or local authorities.

According to recent figures released by the US Federal Trade Commission (FTC) some 8 million US citizens fall victim to identity theft and the annual damage is estimated to some US$52 billion. This amount includes the losses caused by card fraud, an issue directly linked to identity theft.

It is not less likely that similar levels of theft or damage are attained within the EU as yet but ID theft is a major cause of concern and has become a global issue that is being addressed by security and law enforcement and agencies.

Clearly the technology described herein can be used to help secure these personal and private details, possibly by using an MS itself as a form of identifier, or alternatively requiring the MS enable the SSN to be used in a similar manner to the transaction processing described above.

### 3. Business Continuity Management and Disaster Recovery

Business Continuity Management and Disaster Recovery (BCMDR) services have everything to do with corporate survival and staying in business after a disaster (natural or induced by human interaction) has taken place. Such a disaster, which can be a fire, a flood, an attack on the IP infrastructure, sabotage by personnel etc., may have a devastating effect on the organisation and its performance.

Therefore corporate records, documents and other important elements need to be available as soon as possible after such a disaster struck the business. Also original contracts and documents, which are usually kept safe at 3rd party premises, need to be secured. On the other hand having business critical copies of the above laying around in an insecure way is not sensible either so a well designed strategy needs to be in place.

While at the one hand storing business critical documents at a remote site such as a bank vault is a feasible option the storing of electronic data is not so clear due to the fact that such data is constantly updated and modified and that putting them in restricted areas where access is prohibited is much more difficult to enforce. Therefore a policy and a set of stringent measures linking data access not only to "naked" ownership but also associating them to a location where such data may be accessed would be a new feature that would greatly enhance the security that is required in any Business Continuity Management System.

Important elements of BCMDR is a policy on secured back-up, its safe storage and the consistent and complete recovering of data whenever needed as well as the transparent and controlled access to such electronic data. Partly this area is covered by Information Rights Management and Digital Rights Management methodologies especially in the area of Intellectual Property Rights, basic but business critical legal and contractual matters, corporate expertise, knowledge and commercially sensitive data including financial records etc.

### 4. Networked equipment incl. Routers, Switches and Terminals

The secure identification of core or boundary network equipment in a high security network such as payment schemes is for various reasons of crucial importance. While hackers and other criminals often try to gain access by pretending to be somebody else or in this particular case something else to break into such systems security also plays a pivotal role for operational and commercial reasons is it is often the basis of the earnings model of an enterprise.

Networks basically transport digital data from one point to another ensuring that the despatching party can rely that such data arrives at the place where such data is expected to arrive, all within a set of predetermined conditions in terms of i.a. time, reliability, consistency and trustworthiness. Data transport can be compared with a chain of events whereby a packet of data is passed on from one node to another and each node ensures that the incoming data is relayed to the next note taking due account of the predetermined conditions mentioned before.

Going one step further the chains of events are in fact a chain or better flow of transactions that at each single node require identification, verification, validation and authentication of each single data packet being a part of a whole stream of such packets. If presented in such format the closeness of managing a secure network infrastructure and a secure payment system becomes evident.

Different classes of network equipment exist, basically ranging from a simple hub, to a switch and a router, the latter comparable to a traffic agent telling traffic which way to go. Often and depending of the class of equipment a certain level of intelligence is built into the devices in addition to the processing allowing to define how traffic will need to be handled by such device.

When discussing the secure payment system earlier herein references were made to securing terminal devices such as POS and ATM equipment. While ATM equipment includes a high degree of intelligence and can basically be compared to a dedicated computer system, POS equipment is comparable to a reading or token entry device with a relatively low intelligence. Both devices are not particularly strong in quickly processing request, one of the core characteristics of network equipment. Still these devices have many points in common so that a number of measures and procedures applied to terminal equipment can be applied to network equipment such as routers and switches.

Earlier the case was made that terminal equipment is prone to identity attacks and the portable and easy to use mobile POS equipment has been targeted relatively often. Leaving skimming aside attacks on ATM terminals are now quickly increasing partly as a result of the situation that ATM are part of public networks and traditional attacks are in such constellation easier to undertake than when they would be part of a private network.

As an example, forging network identities such as IDs that relate to so-called IP addresses can easily be replicated (or in jargon "spoofed") and in the past tremendous problems occurred with the Domain Name System (DNS) an internet backbone redirection mechanism and crucial "phone book" service of the internet. Despite the dependency of internet traffic on a secure and robust DNS system it appeared that the DNS design and in particular its look-up mechanism, is extremely vulnerable to hijacking by third parties. When not careful data packets can be re-routed and assembled by third parties so that sensitive data becomes accessible by not authorised persons. This happens without knowledge of the sender nor the recipient and this effectively means that all the data traffic a company sends out and also receives is accessible so that commercially crucial information

The checks performed by the current payment scheme whereby the location of such terminal is monitored by relating its IP address to a position, taking the IP address and using mapping tools to establish the geographical position is vulnerable to spoofing and DNS attacks which can easily overcome any security mechanism in that respect. The key to protecting such networks is to identify the electronic devices that relay, forward, transmit or broadcast the datatraffic coupled by the knowledge that data is received from validated sources or nodes and passed on to a similar validated node(s) within a secure network.

IDNAID offers equipment DNA similar to the one used by the MS in the abovementioned system. It can continuously monitor the real location of the equipment and it is much better equipped to protect networks against attacks by professional criminal gangs or occasional individual hackers.

## Claims

1. A method for use in authenticating an action using location information comprising a mobile device (1), the method comprising:
obtaining an instruction for the mobile device (1) to enter an action enabled mode;
transmitting mobile device (1) related information, wherein said information comprises device(1) related location information and device(1) related unique identifier code information;
identifying an action enabling token;
determining the validity of the acti on enabling token;
authenticating the action if the action enabling token is determined valid; and
switching the mobile device (1) into the action enabled mode if the action is positively authenticated.

2. A method according to claim 1, wherein the mobile device (1) comprises mobile device software, and
wherein the instruction for the mobile device (1) is obtained by the device software and
wherein switching into the enabled mode is switching the device software into the enabled mode.

3. A method according to claims 1 and 2, further comprising:
determi ni ng further token identifying details for a further token that is to be used for a further acti on;
obtaining an authentication key; and
authenticating the further action if the authenticating key is successfully validated with the further token identifying details.

4. A method according to claims 1 to 3, further comprising:
obtaining a further instruction for the mobile device (1) to perform a task;
providing mobile device (1) identifying details to a remote central apparatus; and
performing the task by the mobile device (1) in accordance with the further instruction.

5. A method according to claim4, wherein the mobile device (1) identifying details comprise:
device (1) software identifying details; or
device (1) operating system identifying details; and/or
device (1) hardware identifying details, comprising device (1) associated instruments.

6. A method according to claims 1 to 5, wherein the mobile device (1) location is determined by processing the location information by a remote central apparatus.

7. A method according to any preceding claim, wherein the predetermined condition comprise user, event, location, time and/or plausibility related constraints individually or in combination.

8. A method according to claims 2 to 7, wherein the further token is a pseudo credential with a limited validity.

9. A method according to any preceding claim, further comprising computing an authentication key associated with the mobile device (1), wherein the key is adapted for use as an action authentication credential.

10. A method according to any preceding claim, wherein the unique identifier code comprise: a code derived from information relating to the mobile device (1) and from constellation and timing information relating to location detecting means associated with the mobile device (1).

11. The method according to any preceding claim, wherein the location is determined by using at least one of a plurality of means comprising in-space satellite systems, terrestrial wired and wireless networks, IP network addresses, sensory devices, pseudolites, direction finding instruments, radio frequency based systems, laser and microwaves or radiation and/or overlay or superimposing systems for providing the location information that is transmitted.

12. A method according to any preceding claim, comprising:
transmitting mobile device (1) location information, unique identifier code and time stamp, wherein the identity of the mobile device (1) is validated using the unique identifier, and wherein the location information comprise:
specific geographical locations or areas **characterised by** a two or three dimensional representation, vicinity or proximity information or locations **characterised by** a registered location individually or in combination, and
wherein the location of the mobile device (1) is at least one of:
the location where the acti on is initiated;
the location where the action is requested;
the location where the action is enabled;
the location where the action is processed;
the current location of the mobile device (1);
the actual location of the mobile device; and/or
the location where the check is performed for the signal identifying an action enabling token;
and wherein the information is derived from at least one of a plurality of means comprising in-space satellite systems, terrestrial wired and wireless networks, sensory devices, pseudolites, direction finding instruments, radio frequency based systems, laser and microwaves or radiation and/or overlay or superimposing systems,
wherein the identifying of the signal is performed by monitoring different signal sources; and wherein the monitoring is constrained by a time condition and wherein the authentication of the action will be disabled if the monitori ng does not correspond to the ti me condition.

13. A method according to any preceding cl ai m, wherein the mobile device (1) is one of:
a mobile component;
a mobile handset;
a mobile PC;
a mobile apparatus;
a boundary terminal device;
a transaction terminal device;
a cellular phone;
a terminal;
an appliance;
an Automated Teller Machine (ATM);
a Point of Sale (POS);
a Personal Navigation Device(PND);
a Personal Digital Assistant;
a node; and/or
any other equipment that operates within an electronic system.

14. An apparatus for use in authenticating an action comprising :
an mobile device (1), and an action authentication system comprising:
means for obtaining an instruction for the mobile device (1) to enter an action enabled mode;
communication means for transmitting mobile device (1) related location information and mobile device (1) related unique identifier code information;
monitoring means for monitoring to check for a signal identifying an action enabling token;
validating means for validating the action if the action enabling token corresponds to a predetermined condition;
authentication means for authenticating the action if the action enabling token is successfully validated; and
switching means for switching the mobile device (1) into the action enabled mode if the action is successfully authenticated.

15. A n action authentication system comprising :
communication means for obtaining an instruction for an mobile device (1) to enter an action enabled mode,
the communication means being adapted for transmitting mobile device (1) related location information and a unique identifier code information;
identifying means to identify an action enabling token;
determi ni ng means to val i date the acti on the acti on enabl i ng token;
wherein the system is further adapted for authenticating the action if the monitori ng corresponds to the predetermined constraint; and
switching means for switching the mobile device (1) into the action enabled mode if the action is positively authenticated.
